# EUROPEAN PATENT SPECIFICATION

(11) **EP 4 363 487 B1**
(45) Date of publication and mention of the grant of the patent: **19.03.2025**
(21) Application number: 21947383.2
(22) Date of filing: 28.06.2021
(51) Int. Cl.: C08G 77/04, C09J 183/04

(54) **SILICONE COMPOSITIONS AND THEIR PREPARATION**
SILICONZUSAMMENSETZUNGEN UND DEREN HERSTELLUNG
COMPOSITIONS DE SILICONE ET LEUR PRÉPARATION

(43) Date of publication of application: 08.05.2024
(73) Proprietor: Dow Silicones Corporation, Midland, Michigan 48686 (US)
(72) Inventor: PENG, Jiang, Shanghai 201203 (CN); GUO, Yi, Shanghai 201203 (CN); WANG, Xiuyan, Shanghai 201203 (CN); ZENG, Zhiping, Shanghai 201203 (CN); WU, Ye, Shanghai 201203 (CN)
(74) Representative: Murgitroyd & Company
(86) International application number: PCT/CN2021/102634
(87) International publication number: WO 2023/272417

(56) References cited:
- WO-A1-2013/101755
- WO-A1-2014/210492
- WO-A1-2015/081148
- WO-A1-2021/002163
- WO-A1-2021/119972
- WO-A1-2021/119972
- WO-A1-2021/119974
- JP-A- 2007 270 004
- US-A- 3 996 184
- US-A- 5 246 980

## Description

This relates to a process for the preparation of a one component translucent room temperature vulcanisable (RTV) silicone composition comprising chain-extended alkoxy end-capped polydiorganosiloxane polymers, and tin-based catalysts. The process generates a one component translucent room temperature vulcanisable (RTV) silicone composition which is stable in storage, in the absence of moisture, and is curable in the presence of atmospheric moisture at ambient temperature. The one component translucent room temperature vulcanisable (RTV) silicone composition resulting from this process was unexpectedly found to have excellent adhesive properties towards polyvinyl chloride (PVC) substrates.

Room temperature vulcanizable (RTV) silicone rubber compositions (hereinafter referred to as "RTV compositions") are well known. Generally, such compositions comprise:
an -OH end-blocked diorganopolysiloxane polymer or an alkoxy end-blocked polydiorganosiloxane polymer which may have an alkylene link to the terminal silicon atoms, and
one or more suitable cross-linking agents.
The cross-linking agents are designed to react with the -OH and/or alkoxy groups of the respective polymers and thereby cross-link the composition to form an elastomeric product. One or more additional ingredients such as catalysts, reinforcing fillers, non-reinforcing fillers, plasticisers/extenders, flame retardants, solvent resistant additives, biocides and the like are often also incorporated into these compositions as and when required.

Several routes are known in the art for the preparation of polydiorganosiloxane polymers having alkoxy end groups. e.g. by reacting di-, tri- or tetra alkoxy silanes (poly alkoxysilanes) with silanol-terminated polydiorganosiloxane polymers in the presence of a catalyst. The reaction is not as straightforward as might be anticipated, however. In fact, silanol groups do not readily react with alkoxysilane groups at ambient temperatures in the absence of a catalyst. A wide variety of compounds have been proposed as suitable catalysts for this purpose. Some, e.g. sulphuric acid, hydrochloric acid, Lewis acids, sodium hydroxide, potassium hydroxide and tetramethylammonium hydroxide are generally chemically severe and when involved in the condensation of silanols with alkoxy silanes, have been found to cause bond scission and random rearrangement. Lithium hydroxide, being an inorganic solid, requires a polar solvent such as methanol to introduce it as a solution into the reaction. However, the presence of methanol leads to a continual regeneration of the catalyst, e.g. in the form of lithium methoxide, and consequently, the resultant polymer reaction product exhibits a rapid lowering of viscosity due to interaction with said regenerated lithium catalyst. Furthermore, many of these catalysts can release displeasing odours and are dangerous to eyes and skin, and their removal is often difficult, requiring extra steps which are laborious and costly.

Silicone sealant compositions having at least one Si-alkoxy bond, e.g. an Si-methoxy bond in the terminal reactive silyl group and having a polydiorganosiloxane polymeric backbone are widely used for sealants in the construction industry because they have low viscosity, good moisture permeability, and weather resistance, and the like. The construction industry generally prefers using one-component compositions as this avoids the need for mixing ingredients immediately before application onto a target substrate and provides compositions with excellent workability.

Such sealant compositions are often provided to create low modulus cured products capable of being highly stretched by a small amount of stress. Low modulus room temperature vulcanisable (RTV) silicone compositions can be used in a wide variety of applications. For example, they have achieved considerable commercial success as highway sealants and more recently in the construction of high-rise buildings. In the case of the construction of high-rise buildings, it is desirable and often critical to utilize low modulus sealants and/or adhesives for adhering window panes to the respective frames (metal or PVC) of a building structure, or for use in the construction of "mirrored" high rise buildings, that is, high rise buildings where the exterior of the building has the appearance of being a large mirror, for both aesthetic and energy-saving reasons. The low modulus property enables the resulting cured silicone elastomers to easily compress and expand with building movement due to winds and the like without causing cohesive or adhesive failure.

Low modulus sealants typically rely on high molecular weight/chain length polydiorganosiloxane polymers which are end-blocked with reactive groups but have low levels of reactive groups attached to silicon atoms along the polymer chain in order to generate cross-linked elastomeric products with low cross-link densities. Such polymers have often been prepared using chain extension processes for which suitable reactive silanes may be utilised as chain extenders during the curing of the composition.

US20040122199 for example, discloses a chain extended polymer product and method for producing same using at least one dialkylaminomethylalkyldialkoxysilane chain extender which results in a chain extension link between -OH terminal polymeric starting materials of or analogous to the following 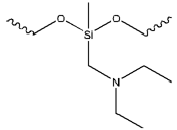 In US20040122199, the terminal -OH groups of resulting chain extended polymers may subsequently be end blocked with alkoxy groups as discussed above and the reader is advised that the resulting chain-extended polymer has improved storage stability and increased viscosity.

Chain extension is also utilised for some two-part silicone sealant compositions. For example, US5290826 describes another use of chain extended polymers in an ultra-low modulus two-part sealant composition which cures rapidly in deep sections when the two parts are mixed together. The first part consists essentially of a hydroxyl endblocked polydiorganosiloxane, non-reinforcing, non-acidic filler, diacetamidosilane chain extender and an aminoxysilicone compound and the second part consists essentially of a hydroxyl endblocked polydiorganosiloxane, non-reinforcing, non-acidic filler, and water. When mixed together, the resulting composition cures rapidly in deep sections and the polymers are not end-capped. In this case the chain-extension linkage formed between two -OH terminal polymeric starting materials is different and is provided below:

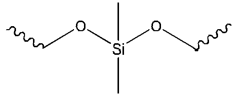

However, unfortunately, many of the one-component compositions e.g. one component alkoxy translucent sealant compositions are well known for having poor adhesion properties with respect to PVC. This has proved a long-term problem given the desire to use low-modulus sealants in the construction of high-rise buildings because of their ability to easily compress and expand with building movement due to winds and the like without causing cohesive or adhesive failure. WO2021/119972 A1 relates to a process for end capping and chain extending silanol terminated polydiorganosiloxanes. The resulting capped polymeric material may be utilised as a polymer in e.g. a one-part alkoxy sealant composition such as, for example, an alkoxy low modulus clean (non-staining) or clear sealant composition.

There is provided a process for preparing a one component translucent room temperature vulcanisable (RTV) silicone composition comprising the steps of :
(i) chain extending a silanol terminated polydiorganosiloxane (ai) by reacting it with a diacetamidosilane chain extender (aii) to form a chain-extended silanol terminated polydiorganosiloxane intermediate (aiii);
(ii) reacting the chain-extended silanol terminated polydiorganosiloxane intermediate (aiii) of step (i) with one or more polyalkoxy silane(s) (aiv) of the structure

   (R²-O)_{(4-b)}-Si-R¹_{b}

   where b is 0, 1 or 2, R² is an alkyl group which may be linear or branched having from 1 to 15 carbons and R¹ may be any suitable group i.e. a monovalent hydrocarbon radical such as R², cycloalkyl groups; alkenyl groups, aryl groups; aralkyl groups aminoalkyl groups, (meth)acrylate groups, glycidyl ether groups and groups obtained by replacing all or part of the hydrogen in the preceding organic groups with halogen; in the presence of a basic end-capping catalyst (av) to form a chain-extended alkoxy end-capped polydiorganosiloxane polymer reaction product (a);
(iii) Introducing a cross-linker (b), reinforcing silica filler which has optionally been hydrophobically treated(c), one or more adhesion promoters (e) and one or more tin-based condensation catalysts (f) into the chain-extended alkoxy end-capped polydiorganosiloxane polymer reaction product (a);in any suitable order to form a mixture;
(iv) Vacuum stripping the mixture of step (iii), and
(v) Introducing one or more moisture scavengers (d).

There is provided a one component translucent room temperature vulcanisable (RTV) silicone composition obtained or obtainable by a process comprising the steps of :
(i) chain extending a silanol terminated polydiorganosiloxane (ai) by reacting it with a diacetamidosilane chain extender (aii) to form a chain-extended silanol terminated polydiorganosiloxane intermediate (aiii);
(ii) reacting the chain-extended silanol terminated polydiorganosiloxane intermediate (aiii) of step (i) with one or more polyalkoxy silane(s) (aiv) of the structure (R²-O)_{(4-b)}-Si-R¹_{b}
   where b is 0, 1 or 2, R² is an alkyl group which may be linear or branched having from 1 to 15 carbons and R¹ may be any suitable group i.e. a monovalent hydrocarbon radical such as R²,cycloalkyl groups; alkenyl groups, aryl groups; aralkyl groups aminoalkyl groups, (meth)acrylate groups, glycidyl ether groups and groups obtained by replacing all or part of the hydrogen in the preceding organic groups with halogen; in the presence of a basic end-capping catalyst (av) to form a chain-extended alkoxy end-capped polydiorganosiloxane polymer reaction product (a);
(iii) Introducing a cross-linker (b), reinforcing silica filler which has optionally been hydrophobically treated (c), one or more adhesion promoters (e) and one or more tin-based condensation catalysts (f) into the chain-extended alkoxy end-capped polydiorganosiloxane polymer reaction product (a); in any suitable order to form a mixture;
(iv) Vacuum stripping the mixture of step (iii), and
(v) Introducing one or more moisture scavengers (d).

There is provided herein a one component translucent room temperature vulcanisable (RTV) silicone composition comprising
(a) a chain-extended alkoxy end-capped polydiorganosiloxane polymer reaction product of the following process:
   (i) chain extending a silanol terminated polydiorganosiloxane (ai) by reacting it with a diacetamidosilane chain extender (aii) to form a chain-extended silanol terminated polydiorganosiloxane intermediate (aiii);
   (ii) reacting the chain-extended silanol terminated polydiorganosiloxane intermediate (aiii) of step (i) with one or more polyalkoxy silane(s) (aiv) of the structure

      (R²-O)_{(4-b)}-Si-R¹_{b}

   where b is 0, 1 or 2, R² is an alkyl group which may be linear or branched having from 1 to 15 carbons and R¹ may be any suitable group i.e. a monovalent hydrocarbon radical such as R², cycloalkyl groups; alkenyl groups, aryl groups; aralkyl groups aminoalkyl groups, (meth)acrylate groups, glycidyl ether groups and groups obtained by replacing all or part of the hydrogen in the preceding organic groups with halogen; in the presence of a basic end-capping catalyst (av);
   together with
(b) cross-linker;
(c) reinforcing silica filler which may optionally be hydrophobically treated;
(d) one or more moisture scavengers;
(e) one or more adhesion promoters,
(f) a tin-based catalyst.

There is also provided a cured sealant product which is the cured product of the above.

There is also provided the use of a one component translucent room temperature vulcanisable (RTV) silicone composition prepared by way of the process described herein for enhanced adhesion to poly vinyl chloride substrates.

It was surprisingly found that one component translucent room temperature vulcanisable (RTV) silicone compositions comprising chain-extended alkoxy end-capped polydiorganosiloxane polymers, when chain-extended with diacetamidosilane chain extenders unexpectedly provided a significant improvement in adhesion to the traditionally difficult to adhere to polyvinyl chloride (PVC) whilst avoiding known issues previously encountered during efforts to improve translucent sealant adhesion, such as potential yellowing caused by increasing the concentrations of adhesion promoters and/or causing coloration of the sealants due to the increased presence of titanates.

The silanol terminated polydiorganosiloxane (ai) has at least two silanol groups per molecule and may have the formula:

(HO)₃₋ₙRₙSi-(Z)_{d}-(O)_{q}-(R_{y}SiO_{(4-y)/2})_{z}-(SiR₂₋Z)_{d}-Si-Rₙ(OH)₃₋ₙ (1)

in which each R is an alkyl, alkenyl or aryl group, and Z is a divalent organic group;
d is 0 or 1, q is 0 or 1 and d + q = 1; n is 0, 1 or 2, y is 0, 1 or 2, and z is an integer such that said organopolysiloxane polymer (ai) has a viscosity of from 1,000 to 100,000 mPa.s at 25°C, alternatively from 5,000 to 90,000 mPa.s at 25°C, measured using a Brookfield^{®} rotational viscometer with spindle LV-4 (designed for viscosities in the range between 1,000-2,000,000mPa.s) at a shear rate of 20 revolutions per minute. Hence, suffix z may be an integer of from about 200 to about 5000.

Typically in the above d is 0, q is 1 and n is 1 or 2, alternatively n is 2. In such a case the silanol terminated polydiorganosiloxane (ai) has the following structure:

(HO)₃₋ₙRₙSi-O-(R_{y}SiO_{(4-y)/2})_{z}-Si-Rₙ(OH)₃₋ₙ

with R, y and z being as described above, the average value of y is about 2, i.e. the silanol terminated polymer is substantially (i.e. greater than (>) 90%) linear, alternatively >97% linear).

Each R is individually selected from alkyl groups, alternatively alkyl groups having from 1 to 10 carbon atoms, alternatively from 1 to 6 carbon atoms, alternatively 1 to 4 carbon atoms, alternatively methyl or ethyl groups; alkenyl groups alternatively alkenyl groups having from 2 to 10 carbon atoms, alternatively from 2 to 6 carbon atoms such as vinyl, allyl and hexenyl groups; aromatic groups, alternatively aromatic groups having from 6 to 20 carbon atoms, substituted aliphatic organic groups such as 3,3,3-trifluoropropyl groups aminoalkyl groups, polyaminoalkyl groups, and/or epoxyalkyl groups.

Each Z is independently selected from an alkylene group having from 1 to 10 carbon atoms. In one alternative, each Z is independently selected from an alkylene group having from 2 to 6 carbon atoms; in a further alternative, each Z is independently selected from an alkylene group having from 2 to 4 carbon atoms. Each alkylene group may for example be individually selected from an ethylene, propylene, butylene, pentylene and/or hexylene group. However, as previously indicated in the present instance d is usually 0 (zero).

The silanol terminated polydiorganosiloxane (ai) can be a single siloxane represented by Formula (1) or it can be mixtures of polydiorganosiloxane polymers represented by the aforesaid formula. Hence, the term "siloxane polymer mixture" in respect to the silanol terminated polydiorganosiloxane (ai) is meant to include any individual polydiorganosiloxane polymer (ai) or mixtures of polydiorganosiloxane polymers (ai).

The Degree of Polymerization (DP), (i.e. in the above formula substantially z), is usually defined as the number of monomeric units in a macromolecule or polymer or oligomer molecule of silicone. Synthetic polymers invariably consist of a mixture of macromolecular species with different degrees of polymerization and therefore of different molecular weights. There are different types of average polymer molecular weight, which can be measured in different experiments. The two most important are the number average molecular weight (Mn) and the weight average molecular weight (Mw). The Mn and Mw of a silicone polymer can be determined by Gel permeation chromatography (GPC) with precision of about 10-15%. This technique is standard and yields Mw, Mn and polydispersity index (PI). The degree of polymerisation (DP) =Mn/Mu where Mn is the number-average molecular weight coming from the GPC measurement and Mu is the molecular weight of a monomer unit. PI=Mw/Mn. The DP is linked to the viscosity of the polymer via Mw, the higher the DP, the higher the viscosity.

In step (i) of the process the silanol terminated polydiorganosiloxane (ai) described above is chain extended using at least one diacetamidosilane chain extender (aii)
Such diacetamidosilanes (aii) are known chain-extending materials for low modulus sealant formulations as described in for example US5017628 and US3996184. The diacetamidosilane chain extenders (aii) may for example have the structure

CH₃-C(=O)-N(R¹³)-Si(R¹⁴)₂-N(R¹³)-C(=O)-CH₃

wherein each R¹³ may be the same or different and may be the same as R as defined above, alternatively, each R¹³ may be the same or different and may comprise an alkyl group having from 1 to 6 carbons, alternatively 1 to 4 carbons. Each R¹⁴ may also be the same or different and may also be the same as R as defined above but preferably is an alkyl group having from 1 to 6 carbons, alternatively 1 to 4 carbons or an alkenyl group having from 2 to 6 carbons, alternatively 2 to 4 carbons, alternatively vinyl. In use the diacetamidosilane chain extenders (aii) may be selected from one or more of the following:
N, N'-(dimethylsilylene)bis[N-methylacetamide]
N, N'-(dimethylsilylene)bis[N-ethylacetamide]
N, N'-(diethylsilylene)bis[N-methylacetamide]
N, N'-(diethylsilylene)bis[N-ethylacetamide]
N, N'-(dimethylsilylene)bis[N-propylacetamide]
N, N'-(diethylsilylene)bis[N-propylacetamide]
N, N'-(dipropylsilylene)bis[N-methylacetamide]
N, N'-(dipropylsilylene)bis[N-ethylacetamide]
N, N'-(methylvinylsilylene)bis[N-ethylacetamide]
N, N'-(ethylvinylsilylene)bis[N-ethylacetamide]
N, N'-(propylvinylsilylene)bis[N-ethylacetamide]
N, N'-(methylvinylsilylene)bis[N-methylacetamide]
N, N'-(ethylvinylsilylene)bis[N-methylacetamide] and/or
N, N'-(propylvinylsilylene)bis[N-methylacetamide].
In an alternative, the diacetamidosilane chain extenders may be a dialkyldiacetamidosilane selected from N, N'-(dimethylsilylene)bis[N-ethylacetamide] and/or N, N'-(dimethylsilylene)bis[N-methylacetamide]. Alternatively, the dialkyldiacetamidosilane is N, N'-(dimethylsilylene)bis[N-ethylacetamide].

The diacetamidosilane chain extenders (aii) are present in step (i) in an amount of from 0.01 to 5 wt. % of the composition, alternatively 0.01 to 3 wt. % of the composition, alternatively 0.01 to 2.5 wt. % of the composition, alternatively 0.05 to 1 wt.%. of the composition.

The chain-extended silanol terminated polydiorganosiloxane intermediate (aiii) is produced in step (i) by mixing and reacting the silanol terminated polydiorganosiloxane (ai) with a diacetamidosilane chain extender (aii) at room temperature or at a temperature of from 20°C to 40°C for a period of 5 to 20 minutes or until minimum residual diacetamidosilane chain extender (aii) can be detected in the resulting mixture. The mixing may take place in any suitable type of mixer e.g. a speed mixer or Turello mixer.

If desired a suitable plasticiser/extender (sometimes identified as a processing aid) hereafter referred to as a plasticiser, may be introduced into the step (i) product comprising the chain-extended silanol terminated polydiorganosiloxane intermediate (aiii) prior to step (ii). This is because the chain extension process of step (i) significantly increases the viscosity of the polymers which undergo chain-extension and introduction of a plasticiser will reduce the viscosity of the chain-extended silanol terminated polydiorganosiloxane intermediate (aiii) if desired prior to step (ii) the end-capping step described below.

Once satisfied that step (i) has gone to completion, step (ii) may proceed in which the chain-extended silanol terminated polydiorganosiloxane intermediate (aiii) is alkoxy end capped by reacting it with one or more polyalkoxy silane(s) (aiv) as defined above in the presence of a basic end-capping catalyst (av).

The one or more polyalkoxy silane(s) (aiv) is of the structure

(R²-O)_{(4-b)}-Si-R¹_{b}

where b is 0, 1 or 2, alternatively 0 or 1; R² is an alkyl group having from 1 to 15 carbons alternatively from 1 to 10 carbons, alternatively from 1 to 6 carbons and may be linear or branched, for example methyl, ethyl, propyl, n-butyl, t-butyl, pentyl and hexyl, alternatively methyl or ethyl, alternatively R² may be a methyl group. R¹ may be any suitable group i.e. a monovalent hydrocarbon radical such as R² which may be substituted or unsubstituted e.g. substituted by halogen such as fluorine and chlorine e.g. trifluoropropyl and/or perfluoropropyl; cycloalkyl groups (for example cyclopentyl and cyclohexyl); alkenyl groups (for example vinyl and allyl); aryl groups (for example phenyl, and tolyl); aralkyl groups (for example 2-phenylethyl) and groups obtained by replacing all or part of the hydrogen in the preceding organic groups with halogen. In one embodiment R¹ may be a vinyl, methyl or ethyl, group, alternatively a vinyl or methyl group alternatively a methyl group. When b is 0 or 1 this means that the polyalkoxysilane has either 4 or 3 alkoxy groups. Typically, the silanol terminated polydiorganosiloxane (ai) has one terminal silanol bond (-Si-OH) per terminal silicon, in such a case the end-capping reaction will generate terminal groups replacing the (-Si-OH) including 3 Si-alkoxy bonds or two Si-alkoxy bonds and e.g. an alkyl or vinyl or the like.

Typically the amount of polyalkoxy silane(s) (aiv) present in the starting materials for the end-capping reaction is determined so that there is at least an equimolar amount of polyalkoxy silane present relative to the amount of -OH groups on the polymer. Hence, the greater the viscosity/chain length of the intermediate (aiii) used, the less the number of -OH groups present in the polymer and consequently less polyalkoxy silane (aiv) is required. Equally the opposite is correct i.e. the smaller the viscosity/chain length of the intermediate (aiii) used, the greater the number of -OH groups present in the intermediate (aiii) and consequently a greater amount of polyalkoxy silane (aiv) is required. However, in some instances there is a preference to include a significant molar excess of polyalkoxy silane (aiv) so that any remaining unreacted polyalkoxy silane (aiv) present at the end of the end-capping reaction i.e. in the alkoxy end-capped, polydiorganosiloxane polymer reaction end-product is then utilised as a cross-linker in the one component translucent room temperature vulcanisable (RTV) silicone composition. Hence, in one embodiment herein preferably there is a molar excess of polyalkoxy silane (aiv) with respect to -OH groups on the intermediate (aiii) being end-capped.

The end-capping catalyst (av) utilised in accordance with the disclosure herein may be any suitable basic catalyst which catalyses the alkoxy end-capping reaction. Such suitable basic catalysts include for the sake of example tetramethylammonium hydroxide amines, basic inorganic oxides, titanium/amine combinations, carboxylic acid/amine combinations, N,N'-disubstituted hydroxylamines, carbamates, metal hydroxides such as sodium hydroxide, potassium hydroxide, lithium hydroxide and oxime-containing organic compounds. However, one particularly preferred group of basic catalysts are one or more linear, branched or cyclic molecules comprising one or more groups selected from amidine groups, guanidine groups, derivatives of said amidine groups and/or guanidine groups or a mixture thereof.

The amidine or guanidine group may comprise linear, branched or cyclic silicon containing molecules or linear, branched or cyclic organic molecules containing one or more of the groups/structures (1) to (4) depicted below. 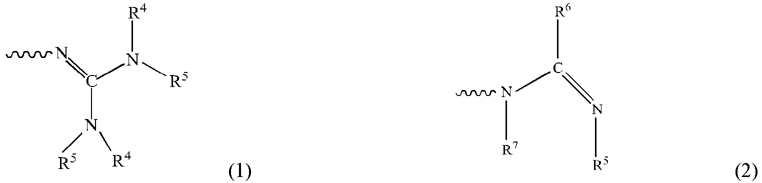 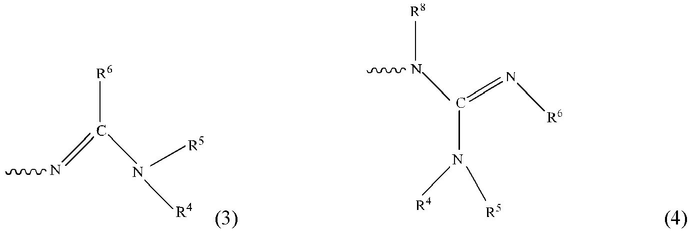 wherein each R⁴, R⁵, R⁶, R⁷ and R⁸ may be the same or different and may be selected from hydrogen, an alkyl group, a cycloalkyl group, a phenyl group, an aralkyl group or alternatively R⁴ and R⁵ or R⁶ and R⁵ or R⁷ and R⁵ or R⁸ and R⁴ may optionally form ring structure, for example they may form a heterogeneously substituted alkylene group to create a ring structure, wherein the heterogeneous substitution is by means of an oxygen or nitrogen atom.

In one embodiment groups/structures (1) to (4) may be part of a silane structure where the nitrogen is bonded to a silicon atom via an alkylene group, e.g.:

(R¹⁰)₃ Si- Z - A

wherein Z is as hereinbefore described, each R¹⁰ may be the same or different and may be a hydroxyl and/or hydrolysable group (such as those described in relation to cross-linker (c) later in the description), an alkyl group; a cycloalkyl group; alkenyl group, aryl group or an aralkyl group; and A is one of groups/structures (1) to (4) above.

In a further alternative any one of groups/structures (1) to (4) above may be linked to a polymer radical selected from a group consisting of alkyd resins, oil-modified alkyd resins, saturated or unsaturated polyesters, natural oils, epoxides, polyamides, polycarbonates, polyethylenes, polypropylenes, polybutylenes, polystyrenes, ethylene-propylene copolymers, (meth)acrylates, (meth)acrylamides and salts thereof, phenolic resins, polyoxymethylene homopolymers and copolymers, polyurethanes, polysulphones, polysulphide rubbers, nitrocelluloses, vinyl butyrates, vinyl polymers, ethylcelluloses, cellulose acetates and/or butyrates, rayon, shellac, waxes, ethylene copolymers, organic rubbers, polysiloxanes, polyethersiloxanes, silicone resins, polyethers, polyetheresters and/or polyether carbonates. If groups/structures (1) to (4) are linked to a siloxane radical they may be bonded to a polysiloxane radical having an average molecular weight in the range of from 206 to 50,000 g/mol, in particular 280 to 25,000 g/mol, particularly preferably 354 to 15,000 g/mol. An end-capping catalyst having such a polysiloxane radical is typically liquid at room temperature, has a low vapor pressure, is particularly readily compatible in curable compositions based on silicone polymers and in this context tends particularly little towards separation or migration.

For example, the end-capping catalyst (av) maybe 1,1,3,3-tetramethylguanidine (TMG) having the structure (CH₃)₂N - C=NH(N(CH₃)₂) or may be a silane of the following structure

(R²-O)(_{4- a - b)}-Si - R³ₐR¹_{b}

where R ², R¹ and b are as described above, a is 1 and R³ is - Z¹ - N = C -(NR⁵R⁴)₂
in which R⁵ and R⁴ are as defined above, Z¹ is an alkylene or an oxyalkylene group having from 2 to 6 carbons and a is 1.
Specific examples include, 2-[3-(trimethoxysilyl)propyl]-1,1,3,3-tetramethylguanidine and 2-[3-(methyldimethoxysilyl)propyl]-1,1,3,3 -tetramethylguanidine.

Alternatively, the end-capping catalyst (av) may be a cyclic guanidine such as for example, Triazabicyclodecene (1,5,7-Triazabicyclo[4.4.0]dec-5-ene (TBD)) as depicted below: 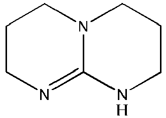 or 7-Methyl-1,5,7-triazabicyclo[4.4.0]dec-5-ene (mTBD) as depicted below

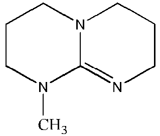

Alternatively, the end-capping catalyst (av) may be a cyclic amidine such as for example,1,5-Diazabicyclo[4.3.0]non-5-ene (DBN) as depicted below 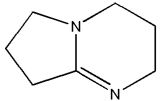 or 1,8-diazabicyclo[5.4.0]undec-7-ene (DBU) as depicted below

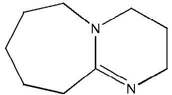

When step (ii) of the process can be continuously mixed (with e.g., a magnetic stir bar or overhead mechanical stirrer), the end-capping catalyst (av) can be added directly as a solid. Furthermore, if the end-capping catalyst (av) can be introduced into the reaction environment in the form of a fine powder a solvent is optional. If the reaction ingredients are to be mixed and allowed to rest, then the end-capping catalyst (av) may be delivered as a solution to ensure homogenous dispersion. When delivered in solution the solvent may be a compatible silicone or organic solvent such as, for the sake of example, a trimethyl terminated polydimethylsiloxane or toluene. However, to minimise VOC issues it was found that a preferable liquid for delivery of the end-capping catalyst was, in actual fact, the or one of the polyalkoxysilanes (aiv) being utilised to end-cap the chain-extended silanol-terminated polydiorganosiloxane intermediate (aiii), for example vinyl trimethoxy silane and/or methyl trimethoxy silane.

If desired the end-capping catalyst (av) used, i.e. one or more linear, branched or cyclic molecules comprising one or more groups selected from amidine groups, guanidine groups, derivatives of said amidine groups and/or guanidine groups or a mixture thereof, may be left in the alkoxy end-capped polymer reaction end-product. Alternatively, depending on its physical characteristics, if merited and/or desired the end-capping catalyst (av) may be extracted from the polymer reaction end-product subsequent to completion of the reaction. Catalyst extraction, if required, is undertaken at the end of the reaction process and may take place before or after the optional introduction of a neutralising/stabilisation agent. The chosen method of extraction depends on the physical nature of the end-capping catalyst e.g. by filtration or possibly vacuum distillation.

When step (ii) is undertaken it may comprise in the absence of subsequent additional steps, (e.g. to make a one component translucent room temperature vulcanisable (RTV) silicone composition or the like composition), based on the weight of the final mixture:
(aiii) chain-extended silanol terminated polydiorganosiloxane intermediate in an amount of from 40 wt. % to 99.5 wt. % of the step (ii) ingredients, alternatively 60 to 99.5 wt. % of the step (ii) ingredients, alternatively from 70 to 99.5 wt. % of the step (ii) ingredients, alternatively from 80 to 99.5 wt. % of the step (ii) ingredients alternatively from 90 to 99.5 wt. % of the step (ii) ingredients, alternatively from 95 to 99.5 wt. % of the step (ii) ingredients;
(aiv) one or more polyalkoxy silane(s) of the structure:

   (R²-O)_{(4-b)}-Si-R¹_{b}
where b is 0, 1 or 2, R² is an alkyl group which may be linear or branched having from 1 to 15 carbons and
R¹ may be any suitable group i.e. a monovalent hydrocarbon radical such as R², cycloalkyl groups; alkenyl groups, aryl groups; aralkyl groups and groups obtained by replacing all or part of the hydrogen in the preceding organic groups with halogen; in an amount of from about 0.5 to 60 wt. % of the step (ii) ingredients, alternatively 0.5 to 40 wt. % of the step (ii) ingredients, 0.5 to 30 wt. % of the step (ii) ingredients, 0.5 to 20 wt. % of the step (ii) ingredients, 0.5 to 10 wt. % of the step (ii) ingredients, alternatively 0.5 to 5 wt. % of the step (ii) ingredients, alternatively 0.25 to 2.5 wt. % of the step (ii) ingredients, and
(av) an end-capping catalyst in the form of any suitable basic catalyst which catalyses the alkoxy end-capping reaction. Such suitable basic catalyst include for the sake of example tetramethylammonium hydroxide amines, basic inorganic oxides, titanium/amine combinations, carboxylic acid/amine combinations, N,N'-disubstituted hydroxylamines, carbamates, metal hydroxides such as sodium hydroxide, potassium hydroxide, lithium hydroxide and oxime-containing organic compounds but preferably consists of one or more linear, branched or cyclic molecules comprising at least one amidine group, guanidine group, or derivatives of said amidine group and/or guanidine group or a mixture thereof. The end-capping catalyst (av) may be introduced in any suitable amount dependent of the catalyst chosen for use. In the case of said preferred one or more linear, branched or cyclic molecules comprising at least one amidine group, guanidine group, or derivatives of said amidine group and/or guanidine group or a mixture thereof said catalysts are provided in an amount of from 0.0005 to 0.75 wt. % of the step (ii) ingredients.

It is to be remembered that if desired the one or more polyalkoxy silanes (aiv) may be provided in a large excess for reasons discussed elsewhere. In the case of the addition of a plasticiser prior to the commencement of step (ii) above, component (aiii) is a mixture of the chain-extended silanol terminated polydiorganosiloxane intermediate (aiii) and the plasticiser.

In one embodiment, typically, chain-extended silanol terminated polydiorganosiloxane intermediate (aiii) is introduced into a suitable mixer and is stirred; the one or more polyalkoxy silanes (aiv) is then added and the resulting mixture is mixed again. Any suitable mixing time can be used for step (ii) e.g. 10 to 30 minutes, alternatively 10 to 20 minutes.
Optionally the mixing in step (ii) may be carried out at an elevated temperature of up to about 100°C, e.g. from 35 to 100°C, alternatively from 50 to 80°C. The end-capping catalyst may be introduced prior to, simultaneously with or subsequent to the addition of the one or more polyalkoxy silanes as deemed necessary.

The resulting product of step (ii) may be isolated from by-products and end-capping catalysts etc if desired. Alternatively, an equimolar amount of intermediate (aiii) and polyalkoxy silanes (aiv) may be utilised in the reaction process so that there is no excess of polyalkoxy silanes (aiv), but equally, if desired, an excess of polyalkoxy silane (aiv) may be added into the above reaction mixture, with the intention of the excess polyalkoxy silanes (aiv) being utilised as cross-linker (c) or part of cross-linker (c) in the preparation of the one component translucent room temperature vulcanisable (RTV) silicone composition.

As previously mentioned plasticiser may be introduced. Typically, this will take place after step (i) and before step (ii) but if preferred it may alternatively be added after step (ii) or even during or subsequent to step (iii). The plasticiser chosen may be any of the plasticisers identified in GB2445821, incorporated herein by reference.

Examples of plasticisers include unreactive linear siloxanes such as trialkyl terminated polydiorganosiloxanes, e.g. trimethyl terminated polydimethylsiloxanes such as hexamethyldisiloxane, octamethyltrisiloxane, and other short chain linear siloxanes such as octamethyltrisiloxane, decamethyltetrasiloxane, dodecamethylpentasiloxane, tetradecamethylhexasiloxane, hexadeamethylheptasiloxane, heptamethyl-3-{(trimethylsilyl)oxy)}trisiloxane, cyclic siloxanes such as hexamethylcyclotrisiloxane, octamethylcyclotetrasiloxane, decamethylcyclopentasiloxane, dodecamethylcyclohexasiloxane; further polydiorganosiloxanes, optionally including aryl functional siloxanes, having a viscosity of from 0.5 to 12,500 mPa.s, measured at 25°C; using Glass Capillary Viscometer (ASTM D-445, IP 71) for 0.5 to 5000 mPa.s (the 5000mPa.s needs test at 100 °C). For 5000-12500 mPa.s, it will use Brookfield cone plate viscometer RV DIII with a cone plate CP-52 at 5 rpm (ASTM D4287).

Alternatively, the plasticisers may include organic liquids such as butyl acetate, alkanes, alcohols, ketones, esters, ethers, glycols, glycol ethers, hydrocarbons, hydrofluorocarbons or any other material which can dilute the composition without adversely affecting any of the component materials. Hydrocarbons include isododecane, isohexadecane, Isopar^{™} L (C11-C 13), Isopar^{™} H (C11- C12), hydrogenated polydecene, mineral oil, especially hydrogenated mineral oil or white oil, liquid polyisobutene, isoparaffinic oil or petroleum jelly. Ethers and esters include isodecyl neopentanoate, neopentylglycol heptanoate, glycol distearate, dicaprylyl carbonate, diethylhexyl carbonate, propylene glycol n butyl ether, ethyl-3 ethoxypropionate, propylene glycol methyl ether acetate, tridecyl neopentanoate, propylene glycol methylether acetate (PGMEA), propylene glycol methylether (PGME), octyldodecyl neopentanoate, diisobutyl adipate, diisopropyl adipate, propylene glycol dicaprylate / dicaprate, and octyl palmitate. Preferably when present the plasticisers comprise or consist of one or more of the silicon containing liquids described above.

If desired, upon completion of the end-capping reaction in step (ii) an acidic stabilizing/neutralising agent may be added to the chain-extended alkoxy end-capped polydiorganosiloxane polymer reaction product (a). This may be done immediately after step (ii) or during the preparation of the one component translucent room temperature vulcanisable (RTV) silicone composition, e.g. after introduction of filler. The chain-extended alkoxy end-capped polydiorganosiloxane polymer reaction product (a) may be stabilised by the addition of such an acidic stabilizing/neutralising agent as can the resulting one component translucent room temperature vulcanisable (RTV) silicone compositions when prepared.

The resulting chain-extended alkoxy end-capped polydiorganosiloxane polymers (a) may be collected and stored for future use (in which case the neutralising step, if undertaken, is undertaken immediately or shortly after completion of step (ii) of the process. Alternatively, the resulting chain-extended alkoxy end-capped polydiorganosiloxane polymers (a) is used immediately in which case the additional components of the one component translucent room temperature vulcanisable (RTV) silicone composition, namely
(b) cross-linker, if required;
(c) reinforcing silica filler which may optionally be hydrophobically treated;
(d) one or more moisture scavengers;
(e) one or more adhesion promoters,
(f) a tin-based catalyst;
are introduced into the composition in any suitable order.

In one embodiment, components (b), (c), (d), (e) and (f) may be introduced into chain-extended alkoxy end-capped polydiorganosiloxane polymers (a) sequentially in alphabetic order with mixing between each introduction. In an alternative embodiment components (f), (b), and (e) are mixed together with component (a), after which component (c) is introduced and the resulting mixture is further mixed so that residual chemically available -OH groups on the polymer and/or filler are able to undergo a condensation reaction with said cross-linker and/or optional adhesion promoter to generate alcohol byproducts which are then removed by vacuum stripping at a predetermined controlled temperature of between 50°C and 100°C; and then finally component (d) is added.

Alternatively, the first component added to chain-extended alkoxy end-capped polydiorganosiloxane polymer (a) may for example be filler(s) (c) so as to effectively form a base comprising the chain-extended alkoxy end-capped polydiorganosiloxane polymer (a) and filler (c). The other components may then be added in any preferred order of the addition such as additional cross-linker (b) if required, followed by cure catalyst (f) followed by adhesion promoter (e) if required with the other optional additional components added as and if required. Alternatively, the adhesion promoter (e), cross-linker (b), when required and tin-based catalyst (f) may be added first followed by the filler(s) and finally the stabilizer/scavenger (d).

The chain-extended alkoxy terminated polydiorganosiloxane polymers (a) are incorporated into a one component translucent room temperature vulcanisable (RTV) silicone composition. By a room temperature vulcanisable composition, it is meant that the composition cures at room temperature without the need for heating, but cure may, if deemed appropriate, be accelerated by heating.

The reaction product of step (ii) the chain-extended alkoxy end-capped polydiorganosiloxane reaction product (a), is typically present in the one component translucent room temperature vulcanisable (RTV) silicone composition in an amount of from 40 to 90 wt. % of the composition, alternatively 40 to 80 wt. % of the composition, alternatively from about 40 to 65 wt. % of the one component translucent room temperature vulcanisable (RTV) silicone composition.

The above one component translucent room temperature vulcanisable (RTV) silicone composition may be designed to form a product, upon cure, having a low modulus.

The separate addition of a cross-linker (b) into said one component translucent room temperature vulcanisable (RTV) silicone composition is optional. This is because whilst an essential component in said one component translucent room temperature vulcanisable (RTV) silicone composition, the cross-linker (b) may be the same as the one or more polyalkoxy silanes of the structure
(R²-O)_{(4-b)}-Si-R¹_{b} used in the end-capping reaction described above, wherein R², R¹ and b are as described before. When this is the case, as previously discussed, it is possible for the polyalkoxy silanes to be introduced into the reaction mixture for end capping the chain-extended silanol terminated polydiorganosiloxane intermediate in sufficient excess at the time of the end-capping reaction that no additional cross-linking agent (b) is required when subsequently preparing the one component translucent room temperature vulcanisable (RTV) silicone compositions. However, if deemed necessary additional cross-linker(s) (b) may be added at the time of preparing the one-part, alkoxy-functional silicone sealant composition.

When an amount of cross-linker (b) is added at the time of preparing the one component translucent room temperature vulcanisable (RTV) silicone composition, any suitable cross-linker having at least three groups per molecule which are reactable with the hydroxyl or hydrolysable groups of chain-extended alkoxy end-capped polydiorganosiloxane polymer (a) may be utilised. Typically, any cross-linker (b) added is one or more silanes or siloxanes which contain silicon bonded hydrolysable groups such as acyloxy groups (for example, acetoxy, octanoyloxy, and benzoyloxy groups); ketoximino groups (for example dimethyl ketoximo, and isobutylketoximino); alkoxy groups (for example methoxy, ethoxy, iso-butoxy and propoxy) and alkenyloxy groups (for example isopropenyloxy and 1-ethyl-2-methylvinyloxy).

Cross-linker (b) needs to have at least three or four hydroxyl and/or hydrolysable groups per molecule which are reactive with the alkoxy groups of the chain-extended alkoxy end-capped polydiorganosiloxane polymer (a). When cross-linker (b) is required to be added at the time of preparing the one component translucent room temperature vulcanisable (RTV) silicone composition, the cross-linker (b) is a silane and when the silane has a total of three silicon-bonded hydroxyl and/or hydrolysable groups per molecule, the fourth group is suitably a non-hydrolysable silicon-bonded organic group. These silicon-bonded organic groups are suitably hydrocarbyl groups which are optionally substituted by halogen such as fluorine and chlorine. Examples of such fourth groups include alkyl groups (for example methyl, ethyl, propyl, and butyl); cycloalkyl groups (for example cyclopentyl and cyclohexyl); alkenyl groups (for example vinyl and allyl); aryl groups (for example phenyl, and tolyl); aralkyl groups (for example 2-phenylethyl) and groups obtained by replacing all or part of the hydrogen in the preceding organic groups with halogen. Preferably however, the fourth silicon-bonded organic group is methyl.

Silanes which can be used as cross-linker (b) include alkyltrialkoxysilanes such as methyltrimethoxysilane (MTM) and methyltriethoxysilane, alkenyltrialkoxy silanes such as vinyltrimethoxysilane and vinyltriethoxysilane, isobutyltrimethoxysilane (iBTM). Other suitable silanes include ethyltrimethoxysilane, vinyltriethoxysilane, phenyltrimethoxysilane, alkoxytrioximosilane, alkenyltrioximosilane, 3,3,3-trifluoropropyltrimethoxysilane, methyltriacetoxysilane, vinyltriacetoxysilane, ethyl triacetoxysilane, di-butoxy diacetoxysilane, phenyl-tripropionoxysilane, methyltris(methylethylketoximo)silane, vinyl-tris-methylethylketoximo)silane, methyltris(methylethylketoximino)silane, methyltris(isopropenoxy)silane, vinyltris(isopropenoxy)silane, ethylpolysilicate, n-propylorthosilicate, ethylorthosilicate. Cross-linker (b) may alternatively comprise any combination of two or more of the above. In one embodiment the cross-linker may be one or more of vinyltrimethoxysilane, methyltrimethoxysilane and /or vinylmethyldimethoxysilane.

The compositions suitably contain cross-linker (b) in at least a stoichiometric amount as compared to chain-extended alkoxy end-capped polydiorganosiloxane polymer (a) described above, irrespective of whether it originates as an excess from the end-capping reaction or from addition thereof after completion of the end-capping reaction or a combination of the two. Hence, the amount present will also depend upon the particular nature of the cross-linker (b) utilised and in particular, the molecular weight of the molecule selected. The cross-linker is therefore typically present in the composition in an amount of from 0.1 to 5 wt. % of the composition but may potentially be present in a greater amount.

Reinforcing silica filler (c) may contain one or more finely divided, reinforcing silica fillers such as fumed silica, colloidal silica and/or precipitated silica. Typically, the surface area of the filler (c) is from 75 to 400 m²/g measured using the BET method in accordance with ISO 9277: 2010, alternatively of from 100 to 300 m²/g using the BET method in accordance with ISO 9277: 2010.

Typically, the fillers (c) are present in the composition in an amount of from about 5 to 30 wt. % of the composition, alternatively from about 5 to 25 wt. % of the composition, alternatively from about 5 to 15 wt. % of the composition depending on the chosen filler. It will be appreciated that in the event of silica being used as the neutralising agent/stabiliser in step with respect to the end-capping catalyst (av) that the amount of silica present will be cumulative as any silica filler added as the neutralising agent/stabiliser will contribute to the filler content of the one component translucent room temperature vulcanisable (RTV) silicone composition. Hence, if 2.5 wt. % of silica is used as the neutralising agent/stabiliser step (ii) the total amount of filler in the one component translucent room temperature vulcanisable (RTV) silicone composition will be 2.5 wt. % greater than the amount of filler added into the composition if introduced separately.

Filler (c) may be hydrophobically treated for example with one or more aliphatic acids, e.g. a fatty acid such as stearic acid or a fatty acid ester such as a stearate, or with organosilanes, organosiloxanes, or organosilazanes hexaalkyl disilazane or short chain siloxane diols to render the filler(s) (c) hydrophobic and therefore easier to handle and obtain a homogeneous mixture with the other adhesive components. The surface treatment of the fillers makes them easily wetted by chain-extended alkoxy end-capped polydiorganosiloxane polymer (a) . These surface modified fillers do not clump and can be homogeneously incorporated into the chain-extended alkoxy end-capped polydiorganosiloxane polymer (a).This results in improved room temperature mechanical properties of the uncured compositions. The fillers may be pre-treated or may be treated in situ when being mixed with chain-extended alkoxy end-capped polydiorganosiloxane polymer (a) . In order for the resulting sealant to be translucent other fillers such as calcium carbonate can't be utilised as the resulting sealants would be opaque.

Component (d) is a moisture scavenger or -OH scavengers (i.e. moisture/water/alcohol). They are typically silazanes or the silane compounds used as cross-linkers. Any suitable -OH (moisture/water/alcohol) scavenger may be used, for example orthoformic acid esters, molecular sieves, silazanes e.g. organosilazanes hexaalkyl disilazane, e.g. hexamethyldisilazane and/or one or more silanes of the structure

R²⁰ⱼSi(OR²¹)₄₋ⱼ

where each R²¹ may be the same or different and is an alkyl group containing at least 2 carbon atoms;
j is 1 or 0; and
R²⁰ is a silicon-bonded organic group selected from a substituted or unsubstituted straight or branched monovalent hydrocarbon group having at least 2 carbons, a cycloalkyl group, an aryl group, an aralkyl group or any one of the foregoing wherein at least one hydrogen atom bonded to carbon is substituted by a halogen atom, or an organic group having an epoxy group, a glycidyl group, an acyl group, a carboxyl group, an ester group, an amino group, an amide group, a (meth)acryl group, a mercapto group or an isocyanate group. When present the -OH scavenger is typically present in a range of from 0.5 to 3.0 wt. % of the total composition, however the amount may be more dependent on the amounts of alcoholic by-products being generated and the process being used to generate the composition. The scavenged by-products are intentionally removed, if possible, from the final one component translucent room temperature vulcanisable (RTV) silicone composition to attain stability and prevent pre-cure reversion during storage.

Component (e) is an adhesion promoter, suitable adhesion promoters (e) may comprise alkoxysilanes of the formula R¹⁴ₕSi(OR¹⁵)₍₄₋ₕ₎, where subscript h is 1, 2, or 3, alternatively h is 3. Each R¹⁴ is independently a monovalent organofunctional group. R¹⁴ can be an epoxy functional group such as glycidoxypropyl or (epoxycyclohexyl)ethyl, an amino functional group such as aminoethylaminopropyl or aminopropyl, a methacryloxypropyl, a mercapto functional group such as mercaptopropyl or an unsaturated organic group. Each R¹⁵ is independently an unsubstituted, saturated hydrocarbon group of at least 1 carbon atom. R¹⁵ may have 1 to 4 carbon atoms, alternatively 1 to 2 carbon atoms. R¹⁵ is exemplified by methyl, ethyl, n-propyl, and iso- propyl.

Alternatively the adhesion promoter may be glycidoxypropyltrimethoxysilane or a multifunctional material obtained by reacting two or more of the above. For example, the reaction product of an alkylalkoxysilicone e.g. trimethoxymethylsilane; an aminoalkoxysilane, e.g. 3-aminopropyl trimethoxysilane and an epoxyalkoxysilane e.g. glycidoxypropyl trimethoxysilane; in a weight ratio of (i):(ii):(iii) of 0.1-6:0.1-5:1.

Examples of suitable adhesion promoters (e) may also include and molecules of the structure:

(R'O)₃Si(CH₂)_{g}N(H)-(CH₂)_{q}NH₂

in which each R' may be the same or different and is an alkyl group containing from 1 to 10 carbon atoms, g is from 2 to 10 and q is from 2 to 10.

The one component translucent room temperature vulcanisable (RTV) silicone composition comprises 0.01% to 2 wt.%, alternatively 0.05 to 2 wt.%, alternatively 0.1 to 1 wt. % of adhesion promoter based on the weight of the composition. Preferably, the speed of hydrolysis of the adhesion promoter should be lower than the speed of hydrolysis of the cross-linker in order to favour diffusion of the molecule towards the substrate rather than its incorporation in the product network.

The one component translucent room temperature vulcanisable (RTV) silicone composition also comprises a condensation cure tin-based catalyst (f). Any suitable tin catalyst may be utilised. Said tin-based catalyst (f). may comprise one or more of the following tin triflates, organic tin metal catalysts such as triethyltin tartrate, tin octoate, tin oleate, tin naphthenate, butyltintri-2-ethylhexoate, tin butyrate, carbomethoxyphenyl tin trisuberate, isobutyltintriceroate, and diorganotin salts especially diorganotin dicarboxylate compounds such as dibutyltin dilaurate (DBTDL), dioctyltin dilaurate (DOTDL), dimethyltin dibutyrate, dibutyltin dimethoxide, dibutyltin diacetate (DBTDA), dibutyltin dibenzoate, stannous octoate, dibutyltin bis(2,4-pentanedionate, dimethyltin dineodecanoate (DMTDN), dioctyltin dineodecanoate (DOTDN) and dibutyltin dioctoate.

Condensation cure tin-based catalyst (f). is typically present in the composition in an amount of from 0.25 to 4.0 wt. % of the one component translucent room temperature vulcanisable (RTV) silicone composition, alternatively from 0.25 to 3wt. % of the composition, alternatively from 0.3% to 2.5 wt. % of the composition.

Other additives may be used, if necessary, in said one component translucent room temperature vulcanisable (RTV) silicone composition. These may include rheology modifiers, stabilizers such as antioxidants, UV and/or light stabilizers, pigments, and fungicides and/or biocides and the like. It will be appreciated that some of the additives are included in more than one list of additives. Such additives would then have the ability to function in all the different ways referred to.

Rheology modifiers which may be incorporated in moisture curable compositions according to the invention include silicone organic co-polymers such as those described in EP0802233 based on polyols of polyethers or polyesters; waxes such as polyamide waxes, non-ionic surfactants selected from the group consisting of polyethylene glycol, polypropylene glycol, ethoxylated castor oil, oleic acid ethoxylate, alkylphenol ethoxylates, copolymers or ethylene oxide and propylene oxide, and silicone polyether copolymers; as well as silicone glycols. For some systems these rheology modifiers, particularly copolymers of ethylene oxide and propylene oxide, and silicone polyether copolymers, may enhance the adhesion to substrates, particularly plastic substrates.

Any suitable antioxidant(s) may be utilised, if deemed required. Examples may include: ethylene bis (oxyethylene) bis(3-tert-butyl-4-hydroxy-5(methylhydrocinnamate) 36443-68-2; tetrakis[methylene(3,5-di-tert-butyl-4-hydroxy hydrocinnamate)]methane 6683-19-8; octadecyl 3,5-di-tert-butyl-4-hydroxyhyrocinnamate 2082-79-3; N,N'-hexamethylene-bis (3,5-di-tert-butyl-4-hydroxyhyrocinnamamide) 23128-74-7; 3,5-di-tert-butyl-4-hydroxyhydrocinnamic acid,C7-9 branched alkyl esters 125643-61-0; N-phenylbenzene amine, reaction products with 2,4,4-trimethylpentene 68411-46-1; e.g. antioxidants sold under the Irganox^{®} name from BASF.

UV and/or light stabilizers may include, for the sake of example include benzotriazole, ultraviolet light absorbers and/or hindered amine light stabilizers (HALS) such as the TINUVIN^{®} product line from Ciba Specialty Chemicals Inc.

Biocides may additionally be utilized in the composition if required. It is intended that the term "biocides" includes bactericides, fungicides and algicides, and the like.

In general chain-extended alkoxy end-capped polydiorganosiloxane polymer (a) is prepared as described above, which is at least partially completed prior to addition of the other components of the one component translucent room temperature vulcanisable (RTV) silicone composition. Typically, the end-capping reaction is taken to completion, and if desired acidic stabilizing/neutralising agent added and end-capping catalyst removed before other components of the one component translucent room temperature vulcanisable (RTV) silicone composition are added. If desired, immediately after the end-capping process has been completed (including introducing the acidic stabilizing/neutralising agent added if desired and removing the end-capping catalyst) the additional components of the one component translucent room temperature vulcanisable (RTV) silicone composition may be introduced.

The one component translucent room temperature vulcanisable (RTV) silicone composition prepared by the process described herein may be designed to provide a low modulus and high extension sealant, adhesive and/or coating composition designed for adhesion onto a PVC substrate. Low modulus silicone sealant compositions are preferably "gunnable" i.e. they have a suitable extrusion capability i.e. a minimum extrusion rate of 10 ml/min as measured by ASTM C1183-04, alternatively 10 to 1000 mL/min, and alternatively 100 to 1000 mL/min.

The components and their amounts in the one component translucent room temperature vulcanisable (RTV) silicone composition may be selected to impart a movement capability to the post-cured sealant material. The movement capability may be greater than 25 %, alternatively movement capability ranges from 25 % to 50 %, as measured by ASTM C719-13.

A one component translucent room temperature vulcanisable (RTV) silicone composition as hereinbefore described may be a gunnable sealant composition used for space/gap filling applications; seal applications, such as sealing the edge of a lap joint in a construction membrane; or seal penetration applications, e.g., sealing a vent in a construction membrane; adhering at least two substrates together.

A one component translucent room temperature vulcanisable (RTV) silicone composition prepared herein is provided in particular for adhesion to PVC whilst avoiding known issues previously encountered during efforts to improve translucent sealant adhesion, such as potential yellowing caused by increasing the concentrations of adhesion promoters and/or causing coloration of the sealants due to the increased presence of titanates.

As previously mentioned, it is well known in the industry that one component translucent room temperature vulcanisable (RTV) silicone compositions have been historically known to have poor adhesive properties with respect to polyvinyl chloride (PVC) used in the manufacture of e.g. window and door frames and the like. This lack of adhesion issue has previously prevented many compositions of this type from being useful for sealing PVC glazing units and the like. Hence, it was therefore completely unexpected to find significantly improved adhesion profiles for the compositions herein with respect to PVC substrates. It would appear that we have unexpectedly identified a one component translucent room temperature vulcanisable (RTV) silicone composition comprising chain-extended alkoxy end-capped polydiorganosiloxane polymers, and tin-based catalysts suitable for sealing PVC substrates thereby providing a solution to a long-term industry problem. This is particularly the case because of the preference of the industry to use PVC for multi-glazed units such as windows and doors and the desire to use low-modulus silicone sealants for sealing glazing units for buildings and the like due to their ability to easily compress and expand with building movement due to winds and the like without causing cohesive or adhesive failure.

There is provided a method for filling a space between two substrates, one or both of which is/are PVC substrates so as to create a seal therebetween, comprising:
a) providing a one component translucent room temperature vulcanisable (RTV) silicone composition as hereinbefore described, and either
b) applying the one component translucent room temperature vulcanisable (RTV) silicone compositions to a first substrate, and bringing a second substrate in contact with the silicone composition that has been applied to the first substrate, or
c) filling a space formed by the arrangement of a first substrate and a second substrate with the one component translucent room temperature vulcanisable (RTV) silicone composition and curing the composition wherein the first substrate, the second substrate or the first and second substrate is made of polyvinyl chloride (PVC).

In one alternative, a one component translucent room temperature vulcanisable (RTV) silicone composition prepared as described herein may be a self-levelling sealant. A self-levelling sealant composition means it is "self-levelling" when extruded from a storage container into a horizontal joint; that is, the sealant will flow under the force of gravity sufficiently to provide intimate contact between the sealant and the sides of the joint space. This allows maximum adhesion of the sealant to the joint surface to take place. The self-levelling also does away with the necessity of tooling the sealant after it is placed into the joint, such as is required with a sealant which is designed for use in both horizontal and vertical joints. Hence, the sealant flow sufficiently well to fill a crack upon application. If the sealant has sufficient flow, under the force of gravity, it will form an intimate contact with the sides of the irregular crack walls and form a good bond; without the necessity of tooling the sealant after it is extruded into the crack, in order to mechanically force it into contact with the crack sidewalls.

Self-levelling compositions as described herein are useful as a sealant having the unique combination of properties required to function as a self-levelling highway sealant. Asphalt paving material is used to form asphalt highways by building up an appreciable thickness of material, such as 20.32 cm, and for rehabilitating deteriorating concrete highways by overlaying with a layer of a thickness such as 10.16 cm. Asphalt overlays undergo a phenomenon known as reflection cracking in which cracks form in the asphalt overlay due to the movement of the underlying concrete at the joints present in the concrete. These reflection cracks need to be sealed to prevent the intrusion of water into the crack, which will cause further destruction of the asphalt pavement when the water freezes and expands.

In order to form an effective seal for cracks that are subjected to movement for any reason, such as thermal expansion and contraction, the seal material must bond to the interface at the sidewall of the crack and must not fail cohesively when the crack compresses and expands. In the case of the asphalt pavement, the sealant must not exert enough strain on the asphalt at the interface to cause the asphalt itself to fail; that is, the modulus of the sealant must be low enough that the stress applied at the bond line is well below the yield strength of the asphalt.

In such instances, the modulus of the cured material is designed to be low enough so that it does not exert sufficient force on the asphalt to cause the asphalt to fail cohesively. The cured material is such that when it is put under tension, the level of stress caused by the tension decreases with time so that the joint is not subjected to high stress levels, even if the elongation is severe.

Alternatively, the one component translucent room temperature vulcanisable (RTV) silicone compositions produced by the process described herein may be utilised as glazing sealants, for home decoration and/or as an elastomeric coating composition, e.g. as a barrier coating for construction materials or for weatherproofing e.g. as a weatherproof coating for a roof, the composition may have a viscosity not dissimilar to a paint thereby enabling application by e.g. brush, roller or spray gun or the like. A one component translucent room temperature vulcanisable (RTV) silicone compositions coating composition as described herein, when applied onto a substrate, may be designed to provide the substrate with e.g. long-term weatherproofing protection from air and water infiltration, under normal movement situations caused by e.g. seasonal thermal expansion and/or contraction, ultra-violet light and the weather.

### Examples:

All viscosity measurements were undertaken using a Brookfield^{®} rotational viscometer with spindle LV-4 (designed for viscosities in the range between 1,000-2,000,000mPa.s) or a Brookfield^{®} rotational viscometer with spindle LV-1 (designed for viscosities in the range between 15 -20,000 mPa.s) and adapting the speed (shear rate) according to the polymer viscosity. Unless otherwise indicated viscosity measurements were taken at 25° C and a shear rate of 20 revolutions per minute.

The compositions used for four examples and four comparative examples are depicted in Tables 1a and 1b respectively. The Examples in Table 1a were all chain-extended using dimethylbis(N-ethylacetamido)silane as the chain-extender whereas the four comparatives were not chain extended. The compositions used are shown below.

**Table 1a: Ingredients of Examples Ex. 1 - Ex. 4 (wt. %)**

| Ingredient name | Ex. 1 | Ex. 2 | Ex. 3 | Ex. 4 |
|---|---|---|---|---|
| Dimethylhydroxyl terminated polydimethylsiloxane, viscosity 50,000mPa.s at 25°C | 64.011 | 65.662 | 64.411 | 54.710 |
| trimethyl terminated polydimethylsiloxane, viscosity 100mPa.s at 25°C | 20.004 | 20.003 | 20.004 | 30.005 |
| 1,5,7-Triazabicyclo[4.4.0]dec-5-ene (TBD) | 0.004 | 0.004 | 0.004 | 0.004 |
| Vinyltrimethoxysilane | 1.700 | 1.700 | 1.700 | 1.700 |
| Methyltrimethoxysilane | 2.100 | 1.500 | 1.500 | 1.500 |
| Dimethylbis(N-ethylacetamido)silane | 0.300 | 0.250 | 1.500 | 0.200 |
| Fumed Silica | 9.001 | 8.001 | 9.001 | 9.001 |
| Aminopropyltrimethoxysilane | 1.000 | 1.000 | 1.000 | 1.000 |
| Tris(3-trimethoxysilylpropyl)isocyanurate | 0.200 | 0.200 | 0.200 | 0.200 |
| Adhesion Promoter-3 | 0.000 | 0.000 | 0.500 | 0.000 |
| dioctyltin dilaurate (DOTDL) | 0.090 | 0.090 | 0.090 | 0.090 |
| dibutyltin dilaurate (DBTDL) | 0.090 | 0.090 | 0.090 | 0.090 |
| Hexamethyldisilazane | 1.500 | 1.500 | 0.000 | 1.500 |

The fumed silica used in these examples was TDK^{®}15AD having a BET surface area of between 130 - 170 m²/g (DIN ISO 9277 DIN 66132) (supplier details) from Wacker Chemie AG. Adhesion promoter-3 was a reaction product of aminopropyltrimethoxysilane and glycidoxypropyltrimethoxysilane.

The sealant compositions made from the ingredients in Table 1a were prepared using a lab 10L Turello Mixer. The dimethylhydroxyl terminated polydimethylsiloxane was initially chain extended by being mixed with the Dimethylbis(N-ethylacetamido)silane for a period of 10 minutes at room temperature. Plasticiser was then added to decrease the resulting viscosity of the product of the chain-extension reaction. The chain-extended polymer was then mixed for a further 10 minutes with vinyltrimethoxysilane in the presence of an end-capping catalyst to produce a chain-extended methoxy end-capped polymer. The other essential components of the sealant composition were added sequentially as follows, cross-linker, tin cure catalysts, adhesion promoter(s), and fumed silica and the whole mixture was mixed until fully blended. Subsequently the resulting mixture was vacuum stripped for 10min before the introduction of the moisture scavenger.

**Table 1b: Ingredients of Comparative Examples C. 1- C. 4 (wt. %)**

| Ingredient name | C. 1 | C. 2 | C. 3 | C. 4 |
|---|---|---|---|---|
| Dimethylhydroxyl terminated polydimethylsiloxane, viscosity 50,000mPa.s at 25°C | 64.311 | 64.911 | 64.896 | 54.91 |
| trimethyl terminated polydimethylsiloxane, viscosity 100mPa.s at 25°C | 20.004 | 20.004 | 20.154 | 30.005 |
| 1,5,7-Triazabicyclo[4.4.0]dec-5-ene (TBD) | 0.004 | 0.004 | 0.004 | 0.004 |
| Vinyltrimethoxysilane | 1.700 | 1.700 | 1.713 | 1.700 |
| Methyltrimethoxysilane | 2.100 | 1.500 | 1.512 | 1.500 |
| Fumed Silica | 9.001 | 9.001 | 9.069 | 9.001 |
| Aminopropyltrimethoxysilane | 1.000 | 1.000 | 1.008 | 1.000 |
| Tris(3-trimethoxysilylpropyl)isocyanurate | 0.200 | 0.200 | 0.202 | 0.200 |
| Octopus-3 | 0.000 | 0.000 | 0.504 | 0.000 |
| dioctyltin dilaurate (DOTDL) | 0.090 | 0.090 | 0.091 | 0.090 |
| dibutyltin dilaurate (DBTDL) | 0.090 | 0.090 | 0.091 | 0.090 |
| Hexamethyldisilazane | 1.500 | 1.500 | 0.756 | 1.500 |

In the case of the comparative examples the composition of which are depicted in Table 1b, the same process was undertaken with the exception that no chain-extension step was carried out.

The compositions were then allowed to cure at room temperature. Tack free time was determined for each sample (minutes) to determine how quickly the sample became tack free after commencement of cure. The physical properties of the resulting elastomeric products were measured after a period 7 days from commencement of cure at room temperature. Adhesion properties were also measured for each elastomeric product on PVC. One series of examples were measured after a period 7 days from commencement of cure at room temperature (7d RT) and a second set of samples were tested after the period of 7 days from commencement of cure at room temperature + 1 day immersed in water (1d WI).

**Table 2a Tack free time, Physical property and adhesion results on PVC for Ex. 1 to Ex. 4**

| Properties | Ex. 1 | Ex. 2 | Ex. 3 | Ex. 4 |
|---|---|---|---|---|
| TFT, min (ASTM C679-15) | 21 | 21 | 12 | 21 |
| Shore A Hardness (ASTM D2240-97) | 14.2 | 12 | 16.1 | 7.6 |
| Tensile Strength MPa (dogbone ASTM D412-98a) | 1.07 | 1.04 | 1.61 | 1.03 |
| Elongation % (dogbone ASTM D412-98a) | 456 | 483 | 664 | 975 |
| Modulus at 100% (MPa) (dogbone ASTM D412-98a) | 0.29 | 0.28 | 0.38 | 0.2 |
| Peel strength kN/m on PVC (7d RT - ASTM C794-18) | 4.54 | 3.99 | 5.99 | 5.15 |
| Failure mode (% CF) on PVC (7d RT) | 85 | 85 | 85 | 85 |
| Peel strength kN/m on PVC (1d WI - ASTM C794-18) | 4.71 | 3.1 | 6.22 | 4.59 |
| Failure mode (% CF) on PVC (1d WI) | 70 | 85 | 85 | 80 |

**Table 2b Tack free time, Physical property and adhesion results on PVC for C. 1 to C. 4**

| Properties | C. 1 | C. 2 | C. 3 | C. 4 |
|---|---|---|---|---|
| TFT, min (ASTM C679-15) | 29 | 30 | 26 | 29 |
| Shore A Hardness (ASTM D2240-97) | 15.1 | 15 | 19.6 | 13.7 |
| Tensile Strength MPa (dogbone ASTM D412-98a) | 1.03 | 1.23 | 1.2 | 1.38 |
| Elongation % (dogbone ASTM D412-98a) | 390 | 444 | 412 | 533 |
| Modulus at 100% (MPa) (dogbone ASTM D412-98a) | 0.34 | 0.34 | 0.43 | 0.31 |
| Peel strength kN/m on PVC (7d RT - ASTM C794-18) | 1.52 | 0.51 | 0.37 | 1.26 |
| Failure mode (% CF) on PVC (7d RT) | 0 | 0 | 0 | 0 |
| Peel strength kN/m on PVC (1d WI - ASTM C794-18) | 0.16 | 0.07 | 0 | 0.53 |
| Failure mode (% CF) on PVC (1d WI) | 0.0 | 0.0 | 0 | 0 |

It can be seen that there was a dramatic improvement of adhesion using the examples, compared to the comparatives despite adhesion pro moters being present in all the compositions. The sealants showed unexpectedly better PVC adhesion than the comparative examples both at room temperature and after water immersion.

Further samples of each example and comparative were additionally tested for adhesion on a variety of other commonly used substrates.

**Table 3a: Ex. 1-4 testing results on other common substrates after 7 days at room temperature:**

| Properties | Ex. 1 | Ex. 2 | Ex. 3 | Ex. 4 |
|---|---|---|---|---|
| Peel strength kN/m on Glass (7d RT - ASTM C794-18) | 3.57 | 3.90 | 5.67 | 6.13 |
| Failure mode (% CF) on Glass | 75 | 100 | 100 | 75 |
| Peel strength kN/m on Anodized Aluminum (7d RT - ASTM C794-18) | 5.95 | 3.36 | 6.43 | 7.21 |
| Failure mode (% CF) on Anodized Aluminum | 100 | 100 | 100 | 100 |
| Peel strength kN/m on Stainless Steel (7d RT - ASTM C794-18) | 3.34 | 3.64 | 6.58 | 5.31 |
| Failure mode (% CF) on Stainless Steel | 0 | 100 | 95 | 70 |

**Table 3b: Ex. 1-4 testing results on other common substrates after a further 1 day of water immersion (comparatives)**

| Properties | Ex. 1 | Ex. 2 | Ex. 3 | Ex. 4 |
|---|---|---|---|---|
| Peel strength kN/m on Glass (1d WI - ASTM C794-18) | 4.34 | 3.26 | 6.13 | 5.55 |
| Failure mode (% CF) on Glass | 90 | 100 | 100 | 100 |
| Peel strength kN/m on Anodized Aluminum (1d WI - ASTM C794-18) | 4.31 | 3.33 | 5.55 | 7.60 |
| Failure mode (% CF) on Anodized Aluminum | 100 | 85 | 100 | 95 |
| Peel strength kN/m on Stainless Steel (1d WI - ASTM C794-18) | 1.07 | 3.27 | 1.91 | 1.87 |
| Failure mode (% CF) on Stainless Steel | 0 | 95 | 0 | 0 |

**Table 3c Comparatives C. 1-4 testing results on other common substrates after 7 days at room temperature:**

| Properties | C.1 | C. 2 | C. 3 | C. 4 |
|---|---|---|---|---|
| Peel strength kN/m on Glass (7d RT - ASTM C794-18) | 3.73 | 2.92 | 3.85 | 3.83 |
| Failure mode (% CF) on Glass | 85 | 50 | 100 | 100 |
| Peel strength kN/m on Anodized Aluminum (7d RT - ASTM C794-18) | 4.36 | 4.40 | 3.17 | 5.59 |
| Failure mode (% CF) on Anodized Aluminum | 90 | 80 | 100 | 100 |
| Peel strength kN/m on Stainless Steel (7d RT - ASTM C794-18) | 3.36 | 2.08 | 3.33 | 3.50 |
| Failure mode (% CF) on Stainless Steel | 60 | 0 | 30 | 90 |

**Table 3d : Comparative C. 1- C. 4 testing results on other common substrates after a further 1 day of water immersion**

| Properties | C. 1 | C. 2 | C. 3 | C. 4 |
|---|---|---|---|---|
| Peel strength kN/m on Glass (1d WI - ASTM C794-18) | 3.01 | 4.57 | 4.06 | 3.34 |
| Failure mode (% CF) on Glass | 100 | 80 | 100 | 100 |
| Peel strength kN/m on Anodized Aluminum (1d WI - ASTM C794-18) | 3.24 | 2.85 | 3.89 | 2.94 |
| Failure mode (% CF) on Anodized Aluminum | 60 | 50 | 70 | 80 |
| Peel strength kN/m on Stainless Steel (1d WI - ASTM C794-18) | 0.89 | 0.44 | 0.37 | 0.37 |
| Failure mode (% CF) on Stainless Steel | 0.0 | 0.0 | 0 | 0 |

The significantly improved adhesion to PVC shown by Ex. 1 to Ex. 4 in Tables 2 was made rather more surprising as an equivalent improved level of adhesion was not observed with respect to the substrates tested as depicted in Table 3. resulting in the identification of improved adhesion to only PVC substrates herein.

A series of further examples and a further comparative were prepared using the following compositions. These utilised an alternative chain-extender and showed that adhesion promotion is an essential factor in the enhancement of adhesion to PVC.

**Table 4a: Ingredients of Ex. 5- Ex. 7 and C. 5 (wt. %)**

| Ingredient name | Ex. 5 | Ex. 6 | C. 5 | C. 6 |
|---|---|---|---|---|
| Dimethylhydroxyl terminated polydimethylsiloxane, viscosity 50,000mPa.s at 25°C | 59.919 | 59.919 | 60.101 | 60.251 |
| trimethyl terminated polydimethylsiloxane, viscosity 100mPa.s at 25°C | 23.967 | 23.967 | 24.040 | 24.100 |
| 1,5,7-Triazabicyclo[4.4.0]dec-5-ene (TBD) | 0.004 | 0.004 | 0.004 | 0.004 |
| Vinyltrimethoxysilane | 2.996 | 2.996 | 3.005 | 3.013 |
| Methyltrimethoxysilane | 0.999 | 0.999 | 1.903 | 1.908 |
| Dimethylbis(N-ethylacetamido)silane | 0.250 | 0.000 | 0.250 | 0.000 |
| methylvinylbis(N-ethylacetamido)silane | 0.000 | 0.250 | 0.000 | 0.000 |
| Fumed Silica | 8.988 | 8.988 | 9.015 | 9.038 |
| Aminopropyltrimethoxysilane | 0.999 | 0.999 | 0.000 | 0.000 |
| Tris(3-trimethoxysilylpropyl)isocyanurate | 0.200 | 0.200 | 0.000 | 0.000 |
| dioctyltin dilaurate (DOTDL) | 0.090 | 0.090 | 0.090 | 0.090 |
| dibutyltin dilaurate (DBTDL) | 0.090 | 0.090 | 0.090 | 0.090 |
| Hexamethyldisilazane | 1.498 | 1.498 | 1.502 | 1.506 |

**Table 4b Adhesion Results of Ex. 5, Ex. 6, C5 and C6 on PVC.**

| Properties | Ex. 5 | Ex. 6 | C. 5 | C. 65 |
|---|---|---|---|---|
| Peel strength kN/m on PVC (7d RT - ASTM C794-18) | 6.01 | 6.46 | 0.11 | 0.11 |
| Failure mode (% CF) on PVC (7d RT) | 100 | 100 | 0 | 0 |
| Peel strength kN/m on PVC (1d WI - ASTM C794-18) | 5.15 | 5.06 | 0.00 | 0.00 |
| Failure mode (% CF) on PVC (1d WI) | 100 | 100 | 0 | 0 |

Formulations using methylvinylbis(N-ethylacetamido)silane as an alternative chain extender also showed good adhesion on PVC. However, comparative 5 is the chain-extended polymer without an adhesion promoter and adhesion is poor, analogous to C. 6 which also has no adhesion promoter present. Generally, the sealants made in examples herein showed unexpectedly better PVC adhesion than the comparative examples both at room temperature and after water immersion. Hence, the present disclosure provided sealants which largely improved the PVC adhesion wherein the adhesion promoters are not effective enough for robust PVC adhesion.

## Claims

1. A process for preparing a one component translucent room temperature vulcanisable (RTV) silicone composition comprising the steps of :
(i) chain extending a silanol terminated polydiorganosiloxane (ai) by reacting it with a diacetamidosilane chain extender (aii) to form a chain-extended silanol terminated polydiorganosiloxane intermediate (aiii);
(ii) reacting the chain-extended silanol terminated polydiorganosiloxane intermediate (aiii) of step (i) with one or more polyalkoxy silane(s) (aiv) of the structure
(R²-O)_{(4-b)}-Si-R¹_{b}
where b is 0, 1 or 2, R² is an alkyl group which may be linear or branched having from 1 to 15 carbons and R¹ may be any suitable group i.e. a monovalent hydrocarbon radical such as R², cycloalkyl groups; alkenyl groups, aryl groups; aralkyl groups aminoalkyl groups, (meth)acrylate groups, glycidyl ether groups and groups obtained by replacing all or part of the hydrogen in the preceding organic groups with halogen; in the presence of a basic end-capping catalyst (av) to form a chain-extended alkoxy end-capped polydiorganosiloxane polymer reaction product (a);
(iii) introducing a cross-linker (b), reinforcing silica filler (c) which has optionally been hydrophobically treated, one or more adhesion promoters (e) and one or more tin-based condensation catalysts (f) into the chain-extended alkoxy end-capped polydiorganosiloxane polymer (a); in any suitable order to form a mixture;
(iv) Vacuum stripping the mixture of step (iii), and
(v) Introducing one or more moisture scavengers (d).

2. A process for preparing a one component translucent room temperature vulcanisable (RTV) silicone composition in accordance with claim 1 wherein the diacetamidosilane chain extenders (aii) have the structure
CH₃-C(=O)-N(R¹³)-Si(R¹⁴)₂-N(R¹³)-C(=O)-CH₃
wherein each R¹³ is the same or different and may comprise an alkyl group having from 1 to 6; each R¹⁴ may also be the same or different and is an alkyl group having from 1 to 6 carbons, or an alkenyl group having from 2 to 6 carbons.

3. A process for preparing a one component translucent room temperature vulcanisable (RTV) silicone composition in accordance with any preceding claim wherein the diacetamidosilane chain extender (aii) comprises a dialkyldiacetamidosilane selected from N, N'-(dimethylsilylene)bis[N-ethylacetamide] and/or N, N'-(dimethylsilylene)bis[N-methylacetamide], methylvinylbis(N-ethylacetamido)silane methylvinylbis(N-methylacetamido)silane or a mixture thereof.

4. A process for preparing a one component translucent room temperature vulcanisable (RTV) silicone composition in accordance with any preceding claim wherein the chain-extended silanol terminated polydiorganosiloxane intermediate (aiii) is produced in step (i) by mixing and reacting the silanol terminated polydiorganosiloxane (ai) with a diacetamidosilane chain extender (aii) at room temperature or at a temperature of from 20°C to 40°C for a period of 5 to 20 minutes or until minimum residual diacetamidosilane chain extender (aii) can be detected in the resulting mixture.

5. A process for preparing a one component translucent room temperature vulcanisable (RTV) silicone composition in accordance with any preceding claim wherein a suitable plasticiser is introduced into the step (i) product comprising the chain-extended silanol terminated polydiorganosiloxane intermediate (aiii) prior to step (ii).

6. A process for preparing a one component translucent room temperature vulcanisable (RTV) silicone composition in accordance with any preceding claim wherein the reaction product of step (ii) the chain-extended alkoxy end-capped polydiorganosiloxane reaction product (a), is present in the one component translucent room temperature vulcanisable (RTV) silicone composition in an amount of from 40 to 90 wt. % of the composition.

7. A process for preparing a one component translucent room temperature vulcanisable (RTV) silicone composition in accordance with any preceding claim wherein ingredients (b), (c), (d), (e) and (f) may be introduced into chain-extended alkoxy end-capped polydiorganosiloxane polymers (a) sequentially with mixing between each introduction.

8. A process for preparing a one component translucent room temperature vulcanisable (RTV) silicone composition in accordance with any one of claims 1 to 6 wherein components (f), (b), and (e) are mixed together with component (a), after which component (c) is introduced and the resulting mixture is further mixed so that residual chemically available -OH groups on the polymer and/or filler are able to undergo a condensation reaction with said cross-linker and/or optional adhesion promoter to generate alcohol byproducts which are then removed by vacuum stripping at a predetermined controlled temperature of between 50°C and 100°C; after which component (d) is added.

9. A process for preparing a one component translucent room temperature vulcanisable (RTV) silicone composition in accordance with any one of claims 1 to 6 wherein the first component added to chain-extended alkoxy end-capped polydiorganosiloxane polymer (a) is filler(s) (c) so as to effectively form a base comprising the chain-extended alkoxy end-capped polydiorganosiloxane polymer (a)and filler (c); the other components may then be added in any preferred order of the addition such as additional cross-linker (b) if required, followed by cure catalyst (d) followed by adhesion promoter (e) if required with the other optional additional ingredients added as and if required.

10. A one component translucent room temperature vulcanisable (RTV) silicone composition obtained or obtainable by a process in accordance with any one of claims 1 to 9.

11. A one component translucent room temperature vulcanisable (RTV) silicone composition comprising
(a) a chain-extended alkoxy end-capped polydiorganosiloxane polymer reaction product of the following process:
(i) chain extending a silanol terminated polydiorganosiloxane (ai) by reacting it with a diacetamidosilane chain extender (aii) to form a chain-extended silanol terminated polydiorganosiloxane intermediate (aiii);
(ii) reacting the chain-extended silanol terminated polydiorganosiloxane intermediate (aiii) of step (i) with one or more polyalkoxy silane(s) (aiv) of the structure
(R²-O)_{(4-b)}-Si-R¹_{b}
where b is 0, 1 or 2, R² is an alkyl group which may be linear or branched having from 1 to 15 carbons and R¹ may be any suitable group i.e. a monovalent hydrocarbon radical such as R², cycloalkyl groups; alkenyl groups, aryl groups; aralkyl groups aminoalkyl groups, (meth)acrylate groups, glycidyl ether groups and groups obtained by replacing all or part of the hydrogen in the preceding organic groups with halogen; in the presence of a basic end-capping catalyst (av);
together with
(b) cross-linker;
(c) reinforcing silica filler which may optionally be hydrophobically treated;
(d) one or more moisture scavengers;
(e) one or more adhesion promoters,
(f) a tin-based catalyst.

12. A translucent cured sealant which is the cured product of the composition of claim 10 or 11.

13. Use of a one component translucent room temperature vulcanisable (RTV) silicone composition prepared by way of the process in accordance with any one of claims 1 to 9 for enhanced adhesion to poly vinyl chloride substrates.

14. Use of a one component translucent room temperature vulcanisable (RTV) silicone composition in accordance with claim 10 or 11 in the manufacture of PVC windows and door frames and the like; as a low-modulus silicone sealant composition for sealing glazing units for buildings; as an elastomeric coating composition for weatherproofing.

15. A method for filling a space between two substrates, one or both of which is/are PVC substrates so as to create a seal therebetween, comprising:
a) providing a one component translucent room temperature vulcanisable (RTV) silicone composition in accordance with claim 10 or 11, and either
b) applying the one component translucent room temperature vulcanisable (RTV) silicone compositions to a first substrate, and bringing a second substrate in contact with the silicone composition that has been applied to the first substrate, or
c) filling a space formed by the arrangement of a first substrate and a second substrate with the one component translucent room temperature vulcanisable (RTV) silicone composition and curing the composition wherein the first substrate, the second substrate or the first and second substrate is made of polyvinyl chloride (PVC).

## Patentansprüche

1. Prozess zum Herstellen einer einkomponentigen, durchscheinenden, bei Raumtemperatur vulkanisierbaren (RTV) Siliconzusammensetzung, umfassend die Schritte:
(i) Kettenverlängern eines Silanol-endständigen Polydiorganosiloxans (ai) durch Reagieren dieses mit einem Diacetamidosilankettenverlängerer (aii), um ein kettenverlängertes Silanol-endständiges Polydiorganosiloxanzwischenprodukt (aiii) auszubilden;
(ii) Reagieren des kettenverlängerten, Silanol-endständigen Polydiorganosiloxanzwischenprodukts (aiii) von Schritt (i) mit einem oder mehreren Polyalkoxysilan(en) (aiv) der Struktur
(R²-O)_{(4-b)}-Si-R¹_{b}
wobei b 0, 1 oder 2 ist, R² eine Alkylgruppe ist, die linear oder verzweigt sein kann, die 1 bis 15 Kohlenstoffe aufweist, und R¹ eine beliebige geeignete Gruppe sein kann, d. h. ein einwertiges Kohlenwasserstoffradikal wie R², Cycloalkylgruppen; Alkenylgruppen, Arylgruppen; Aralkylgruppen, Aminoalkylgruppen, (Meth)acrylatgruppen, Glycidylethergruppen und Gruppen, die durch Ersetzen eines gesamten oder eines Teils des Wasserstoffs in den vorstehenden organischen Gruppen durch Halogen erhalten werden; in der Gegenwart eines basischen endverschließenden Katalysators (av), um ein kettenverlängertes, Alkoxy-endverschlossenes Polydiorganosiloxanpolymerreaktionsprodukt (a) auszubilden;
(iii) Einbringen eines Vernetzers (b), eines verstärkenden Siliciumdioxidfüllstoffs (c), der optional hydrophob behandelt wurde, eines oder mehrerer Haftvermittler (e) und eines oder mehrerer Kondensationskatalysatoren auf Zinnbasis (f) in das kettenverlängerte, Alkoxy-endverschlossene Polydiorganosiloxanpolymer (a); in jeder geeigneten Reihenfolge, um eine Mischung auszubilden;
(iv) Vakuumstrippen der Mischung von Schritt (iii) und
(v) Einbringen eines oder mehrerer Feuchtigkeitsfänger (d).

2. Prozess zum Herstellen einer einkomponentigen, durchscheinenden, bei Raumtemperatur vulkanisierbaren (RTV) Siliconzusammensetzung nach Anspruch 1, wobei die Diacetamidosilankettenverlängerer (aii) die Struktur aufweisen
CH₃-C(=O)-N(R¹³)-Si(R¹⁴)₂-N(R¹³)-C(=O)-CH₃
wobei jedes R¹³ gleich oder unterschiedlich ist und eine Alkylgruppe umfassen kann, die von 1 bis 6 aufweist, jedes R¹⁴ gleich oder unterschiedlich sein kann und eine Alkylgruppe ist, die von 1 bis 6 Kohlenstoffatome aufweist, oder eine Alkenylgruppe, die von 2 bis 6 Kohlenstoffatome aufweist.

3. Prozess zum Herstellen einer einkomponentigen, durchscheinenden, bei Raumtemperatur vulkanisierbaren (RTV) Siliconzusammensetzung nach einem der vorstehenden Ansprüche, wobei der Diacetamidosilankettenverlängerer (aii) ein Dialkyldiacetamidosilan umfasst, das aus N,N'-(Dimethylsilylen)bis[N-ethylacetamid] und/oder N,N'-(Dimethylsilylen)bis[N-methylacetamid], Methylvinylbis(N-ethylacetamido)silan, Methylvinylbis(N-methylacetamido)silan oder einer Mischung davon ausgewählt ist.

4. Prozess zum Herstellen einer einkomponentigen, durchscheinenden, bei Raumtemperatur vulkanisierbaren (RTV) Siliconzusammensetzung nach einem der vorstehenden Ansprüche, wobei das kettenverlängerte, Silanol-endständige Polydiorganosiloxanzwischenprodukt (aiii) in Schritt (i) durch Mischen und Reagieren des Silanol-endständigen Polydiorganosiloxans (ai) mit einem Diacetamidosilankettenverlängerer (aii) bei Raumtemperatur oder bei einer Temperatur von 20 °C bis 40 °C für einen Zeitraum von 5 bis 20 Minuten oder bis ein minimaler Rest des Diacetamidosilankettenverlängerers (aii) in der resultierenden Mischung nachgewiesen werden kann, produziert wird.

5. Prozess zum Herstellen einer einkomponentigen, durchscheinenden, bei Raumtemperatur vulkanisierbaren (RTV) Siliconzusammensetzung nach einem der vorstehenden Ansprüche, wobei vor Schritt (ii) ein geeigneter Weichmacher in das Produkt von Schritt (i) eingebracht wird, umfassend das kettenverlängerte, Silanol-endständige Polydiorganosiloxanzwischenprodukt (aiii).

6. Prozess zum Herstellen einer einkomponentigen, durchscheinenden, bei Raumtemperatur vulkanisierbaren (RTV) Siliconzusammensetzung nach einem der vorstehenden Ansprüche, wobei das Reaktionsprodukt von Schritt (ii), das kettenverlängerte, Alkoxy-endverschlossene Polydiorganosiloxanreaktionsprodukt (a), in der einkomponentigen, durchscheinenden, bei Raumtemperatur vulkanisierbaren (RTV) Silconzusammensetzung in einer Menge von 40 bis 90 Gew.-% der Zusammensetzung vorhanden ist.

7. Prozess zum Herstellen einer einkomponentigen, durchscheinenden, bei Raumtemperatur vulkanisierbaren (RTV) Siliconzusammensetzung nach einem der vorstehenden Ansprüche, wobei die Bestandteile (b), (c), (d), (e) und (f) nacheinander in kettenverlängerte, Alkoxy-endverschlossene Polydiorganosiloxanpolymere (a) eingebracht werden können, wobei zwischen jeder Einbringung gemischt wird.

8. Prozess zum Herstellen einer einkomponentigen, durchscheinenden, bei Raumtemperatur vulkanisierbaren (RTV) Siliconzusammensetzung nach einem der Ansprüche 1 bis 6, wobei die Komponenten (f), (b) und (e) zusammen mit Komponente (a) gemischt werden, wonach Komponente (c) eingeführt wird und die resultierende Mischung weiter gemischt wird, so dass restliche chemisch verfügbare -OH-Gruppen auf dem Polymer und/oder Füllstoff eine Kondensationsreaktion mit dem Vernetzer und/oder optionalen Haftvermittler eingehen können, um Alkoholnebenprodukte zu erzeugen, die dann durch Vakuumstrippen bei einer zuvor bestimmten kontrollierten Temperatur zwischen 50 °C und 100 °C entfernt werden; danach Komponente (d) hinzugefügt wird.

9. Prozess zum Herstellen einer einkomponentigen, durchscheinenden, bei Raumtemperatur vulkanisierbaren (RTV) Siliconzusammensetzung nach einem der Ansprüche 1 bis 6, wobei die erste Komponente, die dem kettenverlängerten, Alkoxy-endverschlossenen Polydiorganosiloxanpolymer (a) hinzugefügt wird, (ein) Füllstoff(e) ist/sind, (c) um eine Basis wirksam auszubilden, umfassend das kettenverlängerte, Alkoxy-endverschlossene Polydiorganosiloxanpolymer (a) und Füllstoff (c); die anderen Komponenten dann in einer beliebigen Reihenfolge hinzugefügt werden können, wie einen zusätzlichen Vernetzer (b), bei Bedarf, gefolgt von einem Härtungskatalysator (d), bei Bedarf, gefolgt von einem Haftvermittler (e), bei Bedarf, wobei die anderen optionalen zusätzlichen Bestandteile nach Bedarf und fall Bedarf besteht hinzugefügt werden.

10. Einkomponentige, durchscheinende, bei Raumtemperatur vulkanisierbare (RTV) Siliconzusammensetzung, die durch einen Prozess nach einem der Ansprüche 1 bis 9 erhalten wird oder erhalten werden kann.

11. Einkomponentige, durchscheinende, bei Raumtemperatur vulkanisierbare (RTV) Siliconzusammensetzung, umfassend
(a) ein kettenverlängertes, Alkoxy-endverschlossenes Polydiorganosiloxanpolymerreaktionsprodukt des folgenden Prozesses:
(i) Kettenverlängern eines Silanol-endständigen Polydiorganosiloxans (ai) durch Reagieren dieses mit einem Diacetamidosilankettenverlängerer (aii), um ein kettenverlängertes Silanol-endständiges Polydiorganosiloxanzwischenprodukt (aiii) auszubilden;
(ii) Reagieren des kettenverlängerten, Silanol-endständigen Polydiorganosiloxanzwischenprodukts (aiii) von Schritt (i) mit einem oder mehreren Polyalkoxysilan(en) (aiv) der Struktur
(R²-O)_{(4-b)}-Si-R¹_{b}
wobei b 0, 1 oder 2 ist, R² eine Alkylgruppe ist, die linear oder verzweigt sein kann, die 1 bis 15 Kohlenstoffe aufweist, und R¹ eine beliebige geeignete Gruppe sein kann, d. h. ein einwertiges Kohlenwasserstoffradikal wie R², Cycloalkylgruppen; Alkenylgruppen, Arylgruppen; Aralkylgruppen, Aminoalkylgruppen, (Meth)acrylatgruppen, Glycidylethergruppen und Gruppen, die durch Ersetzen eines gesamten oder eines Teils des Wasserstoffs in den vorstehenden organischen Gruppen durch Halogen erhalten werden; in der Gegenwart eines basischen endverschließenden Katalysators (av);
zusammen mit
(b) dem Vernetzer;
(c) dem verstärkenden Siliciumdioxidfüllstoff, der optional hydrophob behandelt sein kann;
(d) einem oder mehreren Feuchtigkeitsfängern;
(e) einem oder mehreren Haftvermittlern,
(f) einem Katalysator auf Zinn-Basis.

12. Durchscheinender, ausgehärteter Dichtstoff, der das ausgehärtete Produkt der Zusammensetzung nach Anspruch 10 oder 11 ist.

13. Verwendung einer einkomponentigen, durchscheinenden, bei Raumtemperatur vulkanisierbaren (RTV) Siliconzusammensetzung, das durch den Prozess nach einem der Ansprüche 1 bis 9 für eine verbesserten Haftung auf Polyvinylchloridsubstraten hergestellt wird.

14. Verwendung einer einkomponentigen, durchscheinenden, bei Raumtemperatur vulkanisierbaren (RTV) Siliconzusammensetzung nach Anspruch 10 oder 11 bei einer Fertigung von PVC-Fenstern und Türrahmen und dergleichen; als eine niedermodulige Silicondichtstoffzusammensetzung zum Abdichten von Verglasungseinheiten für Gebäude; als eine elastische Beschichtungszusammensetzung zum Witterungsschutz.

15. Verfahren zum Füllen eines Raums zwischen zwei Substraten, von denen eines oder beide PVC-Substrate ist/sind, um eine Abdichtung dazwischen zu erstellen, umfassend:
a) Bereitstellen einer einkomponentigen, durchscheinenden, bei Raumtemperatur vulkanisierbaren (RTV) Siliconzusammensetzung nach Anspruch 10 oder 11, und entweder
b) Aufbringen der einkomponentigen, durchscheinenden, bei Raumtemperatur vulkanisierbaren (RTV) Siliconzusammensetzungen auf ein erstes Substrat und Inkontaktbringen eines zweiten Substrats mit der Siliconzusammensetzung, die auf das erste Substrat aufgebracht wurde, oder
c) Füllen eines Raums, der durch die Anordnung eines ersten Substrats und eines zweiten Substrats ausgebildet wird, mit der einkomponentigen, durchscheinenden, bei Raumtemperatur vulkanisierbaren (RTV) Siliconzusammensetzung und Aushärten der Zusammensetzung, wobei das erste Substrat, das zweite Substrat oder das erste und das zweite Substrat aus Polyvinylchlorid (PVC) bestehen.

## Revendications

1. Processus permettant de préparer une composition de silicone vulcanisable à température ambiante (RTV) translucide à un composant comprenant les étapes consistant à :
(i) allonger la chaîne d'un polydiorganosiloxane à terminaison silanol (ai) en le faisant réagir avec un agent d'allongement de chaîne diacétamidosilane (aii) pour former un intermédiaire polydiorganosiloxane à terminaison silanol à chaîne allongée (aiii) ;
(ii) faire réagir l'intermédiaire polydiorganosiloxane à terminaison silanol à chaîne allongée (aiii) de l'étape (i) avec un ou plusieurs polyalcoxysilane(s) (aiv) de la structure
(R²-O)_{(4-b)}-Si-R¹_{b}
où b vaut 0, 1 ou 2, R² est un groupe alkyle qui peut être linéaire ou ramifié ayant de 1 à 15 carbones et R¹ peut être n'importe quel groupe approprié c'est-à-dire un radical hydrocarboné monovalent tel que R², groupes cycloalkyle ; groupes alcényle, groupes aryle ; groupes aralkyle groupes aminoalkyle, groupes (méth)acrylate, groupes éther glycidylique et groupes obtenus en remplaçant la totalité ou une partie de l'hydrogène dans les groupes organiques qui précèdent par un halogène ; en présence d'un catalyseur de coiffage terminal basique (av) pour former un produit de réaction polymère polydiorganosiloxane à coiffe terminale alcoxy à chaîne allongée (a) ;
(iii) introduire un agent de réticulation (b), une charge de silice de renforcement (c) qui a facultativement été rendue hydrophobe, un ou plusieurs promoteurs d'adhésion (e) et un ou plusieurs catalyseurs de condensation à base d'étain (f) dans le polymère polydiorganosiloxane à coiffe terminale alcoxy à chaîne allongée (a) ; dans n'importe quel ordre approprié pour former un mélange ;
(iv) extraire sous vide le mélange de l'étape (iii), et
(v) introduire un ou plusieurs piégeurs d'humidité (d).

2. Processus permettant de préparer une composition de silicone vulcanisable à température ambiante (RTV) translucide à un composant selon la revendication 1 dans lequel les agents d'allongement de chaîne diacétamidosilane (aii) ont la structure
CH₃-C(=O)-N(R¹³)-Si(R¹⁴)₂-N(R¹³)-C(=O)-CH₃
dans lequel chaque R¹³ est identique ou différent et peut comprendre des groupes alkyle ayant de 1 à 6 ; chaque R¹⁴ peut également être identique ou différent et est un groupe alkyle ayant de 1 à 6 carbones, ou un groupe alcényle ayant de 2 à 6 carbones.

3. Processus permettant de préparer une composition de silicone vulcanisable à température ambiante (RTV) translucide à un composant selon l'une quelconque revendication précédente dans lequel l'agent d'allongement de chaîne diacétamidosilane (aii) comprend un dialkyldiacétamidosilane choisi parmi N, N'-(diméthylsilylène)bis[N-éthylacétamide] et/ou N, N'-(diméthylsilylène)bis[N-méthylacétamide], méthylvinylbis(N-éthylacétamido)silane méthylvinylbis(N-méthylacetamido)silane ou un mélange de ceux-ci.

4. Processus permettant de préparer une composition de silicone vulcanisable à température ambiante (RTV) translucide à un composant selon l'une quelconque revendication précédente dans lequel l'intermédiaire polydiorganosiloxane à terminaison silanol à chaîne allongée (aiii) est produit à l'étape (i) en mélangeant et en faisant réagir le polydiorganosiloxane à terminaison silanol (ai) avec un agent d'allongement de chaîne diacétamidosilane (aii) à la température ambiante ou à une température allant de 20 °C à 40 °C pendant un laps de temps de 5 à 20 minutes ou jusqu'à ce qu'une quantité résiduelle minimale d'agent d'allongement de chaîne diacétamidosilane (aii) puisse être détectée dans le mélange résultant.

5. Processus permettant de préparer une composition de silicone vulcanisable à température ambiante (RTV) translucide à un composant selon l'une quelconque revendication précédente dans lequel un plastifiant approprié est introduit dans le produit de l'étape (i) comprenant l'intermédiaire polydiorganosiloxane à terminaison silanol à chaîne allongée (aiii) avant l'étape (ii).

6. Processus permettant de préparer une composition de silicone vulcanisable à température ambiante (RTV) translucide à un composant selon l'une quelconque revendication précédente dans lequel le produit de réaction de l'étape (ii) le produit de réaction polydiorganosiloxane à coiffe terminale alcoxy à chaîne allongée (a), est présent dans la composition de silicone vulcanisable à température ambiante (RTV) translucide à un composant en une quantité allant de 40 à 90 % en poids de la composition.

7. Processus permettant de préparer une composition de silicone vulcanisable à température ambiante (RTV) translucide à un composant selon l'une quelconque revendication précédente dans lequel les ingrédients (b), (c), (d), (e) et (f) peuvent être introduits dans les polymères polydiorganosiloxane à coiffe terminale alcoxy à chaîne allongée (a) séquentiellement en mélangeant entre chaque introduction.

8. Processus permettant de préparer une composition de silicone vulcanisable à température ambiante (RTV) translucide à un composant selon l'une quelconque des revendications 1 à 6 dans lequel les composants (f), (b) et (e) sont mélangés ensemble avec le composant (a), après quoi le composant (c) est introduit et le mélange résultant est encore mélangé de sorte que des groupes -OH chimiquement disponibles résiduels sur le polymère et/ou une charge sont aptes à subir une réaction de condensation avec ledit agent de réticulation et/ou le promoteur d'adhésion facultatif pour générer des sous-produits alcool qui sont ensuite éliminés par extraction sous vide à une température commandée prédéterminée comprise entre 50 °C et 100 °C ; après quoi le composant (d) est ajouté.

9. Processus permettant de préparer une composition de silicone vulcanisable à température ambiante (RTV) translucide à un composant selon l'une quelconque des revendications 1 à 6 dans lequel le premier composant ajouté au polymère polydiorganosiloxane à coiffe terminale alcoxy à chaîne allongée (a) est une ou plusieurs charge(s) (c) de façon à former effectivement une base comprenant le polymère polydiorganosiloxane à coiffe terminale alcoxy à chaîne allongée (a) et la charge (c) ; les autres composants peuvent ensuite être ajoutés dans n'importe quel ordre préféré de l'addition tels qu'un agent de réticulation supplémentaire (b) en cas de besoin, suivi par un catalyseur de durcissement (d) suivi par un promoteur d'adhésion (e) en cas de besoin avec les autres ingrédients supplémentaires facultatifs ajoutés selon le besoin et en cas de besoin.

10. Composition de silicone vulcanisable à température ambiante (RTV) translucide à un composant obtenue ou pouvant être obtenue par un processus selon l'une quelconque des revendications 1 à 9.

11. Composition de silicone vulcanisable à température ambiante (RTV) translucide à un composant comprenant
(a) un produit de réaction polymère polydiorganosiloxane à coiffe terminale alcoxy à chaîne allongée du processus suivant :
(i) allonger la chaîne d'un polydiorganosiloxane à terminaison silanol (ai) en le faisant réagir avec un agent d'allongement de chaîne diacétamidosilane (aii) pour former un intermédiaire polydiorganosiloxane à terminaison silanol à chaîne allongée (aiii) ;
(ii) faire réagir l'intermédiaire polydiorganosiloxane à terminaison silanol à chaîne allongée (aiii) de l'étape (i) avec un ou plusieurs polyalcoxysilane(s) (aiv) de la structure
(R²-O)_{(4-b)}-Si-R¹_{b}
où b vaut 0, 1 ou 2, R² est un groupe alkyle qui peut être linéaire ou ramifié ayant de 1 à 15 carbones et R¹ peut être n'importe quel groupe approprié c'est-à-dire un radical hydrocarboné monovalent tel que R², groupes cycloalkyle ; groupes alcényle, groupes aryle ; groupes aralkyle groupes aminoalkyle, groupes (méth)acrylate, groupes éther glycidylique et groupes obtenus en remplaçant la totalité ou une partie de l'hydrogène dans les groupes organiques qui précèdent par un halogène ; en présence d'un catalyseur de coiffage terminal basique (av) ;
conjointement avec
(b) un agent de réticulation ;
(c) une charge de silice de renforcement qui peut facultativement être rendue hydrophobe ;
(d) un ou plusieurs piégeurs d'humidité ;
(e) un ou plusieurs promoteurs d'adhésion,
(f) un catalyseur à base d'étain.

12. Produit d'étanchéité durci translucide qui est le produit durci de la composition selon la revendication 10 ou 11.

13. Utilisation d'une composition de silicone vulcanisable à température ambiante (RTV) translucide à un composant préparée au moyen du processus selon l'une quelconque des revendications 1 à 9 pour une adhésion améliorée à des substrats en polychlorure de vinyle.

14. Utilisation d'une composition de silicone vulcanisable à température ambiante (RTV) translucide à un composant selon la revendication 10 ou 11 dans la fabrication de fenêtres et cadres de portes en PVC et similaires ; en tant que composition d'étanchéité à faible module permettant d'assurer l'étanchéité d'unités de vitrage pour des bâtiments ; en tant que composition de revêtement élastomère pour assurer une résistance aux intempéries.

15. Procédé pour le remplissage d'un espace entre deux substrats, l'un et/ou l'autre de ceux-ci étant des substrats en PVC de façon à créer un joint d'étanchéité entre eux, comprenant :
a) la fourniture d'une composition de silicone vulcanisable à température ambiante (RTV) translucide à un composant, selon la revendication 10 ou 11, et soit
b) l'application de la composition de silicone vulcanisable à température ambiante (RTV) translucide à un composant sur un premier substrat, et le fait d'amener un second substrat en contact avec la composition de silicone qui a été appliquée sur le premier substrat, soit
c) le remplissage d'un espace formé par l'agencement d'un premier substrat et d'un second substrat avec la composition de silicone vulcanisable à température ambiante (RTV) translucide à un composant et le durcissement de la composition dans lequel le premier substrat, le second substrat ou le premier et le second substrat sont fabriqués en chlorure de polyvinyle (PVC).
